# EUROPEAN PATENT APPLICATION

(11) **EP 4 422 121 A1**
(43) Date of publication of application: **28.08.2024**
(21) Application number: 23275036.4
(22) Date of filing: 24.02.2023
(51) Int. Cl.: H04L 9/08, H04L 9/40, G06F 21/62

(54) **METHOD AND APPARATUS FOR SECURE MANAGEMENT OF DATA**

(71) Applicant: nCipher Security Limited, Cambridge CB1 2GA (GB)
(72) Inventor: HARVEY, Ian Nigel, Cambridge, CB1 2GA (GB)
(74) Representative: Marks & Clerk LLP

(57) **Abstract**

A computer implemented method comprising:
storing a first set of data items in an encrypted manner, the first set of data items comprising a first data item stored in an encrypted manner using a first final cryptographic key and a second data item stored in an encrypted manner using a second final cryptographic key, wherein the first final cryptographic key is protected through a chain of encryption by a master key and the second final cryptographic key is protected through a chain of encryption by the master key; and
storing a second set of one or more data items in an encrypted manner, the second set of one or more data items comprising a third data item stored in an encrypted manner using a third final cryptographic key, wherein the third final cryptographic key is protected through a chain of encryption by master key.

## Description

### FIELD

The present disclosure relates to methods and apparatus for secure data management and storage.

### BACKGROUND

Items of data stored in disk volumes or databases may be encrypted using a master key. For example, each item of data may be encrypted by a master key and stored in encrypted form. To change the master key, all the data items are decrypted using the old master key, and then re-encrypted with the new master key. This can be a computationally expensive process, particularly where large numbers of data items are encrypted with the master key.

Furthermore, when an individual item of data is deleted, any backup copies of the encrypted data will still be readable until the master key has been changed. In other words, data items may not be truly "deleted" until the master key is changed. Since changing the master key is a computationally expensive process, it may be done only infrequently, for example every few months. This leaves a long window during which deleted data items are still potentially accessible.

### BRIEF DESCRIPTION OF THE DRAWINGS

Devices and methods in accordance with non-limiting embodiments will now be described with reference to the accompanying figures in which:
Figure 1(a) is a schematic illustration of a data storage component, in which a number of data items are stored in an encrypted manner;
Figure 1(b) shows a schematic illustration of the data storage component in which the first data item has been deleted;
Figure 1(c) shows a schematic illustration of the data storage component, in which the remaining data items are encrypted using the new master key;
Figure 2(a) is a schematic illustration of a device according to an embodiment, comprising a first data storage component in which a number of data items are stored;
Figure 2(b) is a schematic illustration of the device, in which both the encrypted first data item and the encrypted copy of the final key used to encrypt the data item are deleted from the storage component;
Figure 2(c) is a schematic illustration of the device, in which the first data item has been securely deleted;
Figure 3(a) is a schematic illustration of a device according to another embodiment, comprising a first data storage component in which a number of data items are stored in an alternative arrangement;
Figure 3(b) is a schematic illustration of the device, in which the encrypted first data item is deleted from the storage component;
Figure 3(c) is a schematic illustration of the device, in which the first data item has been securely deleted;
Figure 4 is a schematic illustration of a device in accordance with an embodiment;
Figure 5 is a schematic illustration of a method of storing data in accordance with an embodiment;
Figure 6(a) shows a schematic illustration of an example of the data stored in the first storage component prior to performance of the method;
Figure 6(b) shows a schematic illustration of an example of the data stored in the first storage component in which a set of cryptographic keys are generated and stored on the first storage component in the tree arrangement described in relation to Figure 2(a);
Figure 6(c) shows the encrypted first data item stored on the first storage component;
Figure 7(a) is a schematic illustration of another method of storing data in accordance with an embodiment;
Figure 7(b) shows a schematic illustration of an example of the data stored in the first storage component prior to performance of the method;
Figure 7(c) shows the stored data after a first set of data items is stored in an encrypted manner;
Figure 7(d) shows the stored data after a second set of data items is stored in an encrypted manner;
Figure 8(a) is a schematic illustration of another method of storing data in accordance with an embodiment;
Figure 8(b) shows a schematic illustration of an example of the data stored in the first storage component prior to performance of S704b;
Figure 8(c) shows a schematic illustration of an example of the data stored in the first storage component after S704b has been performed;
Figure 9(a) is a schematic illustration of another method of storing data in accordance with an embodiment;
Figure 9(b) shows a schematic illustration of an example of the data stored in the first storage component prior to performance of S704c;
Figure 9(c) shows a schematic illustration of an example of the data stored in the first storage component after the new final cryptographic key is stored in S704c;
Figure 9(d) shows a schematic illustration of an example of the data stored in the first storage component after the re-encrypted selected existing final cryptographic key is stored in S704c;
Figure 9(e) shows a schematic illustration of an example of the data stored in the first storage component after S704c has been performed;
Figure 10 shows a schematic illustration of a method of reading a data item from a first storage component in accordance with an example;
Figure 11 shows a schematic illustration of a method of updating or overwriting a data item from a first storage component in accordance with an embodiment;
Figure 12 is a schematic illustration of a method of deleting a data item according to an embodiment.

### DETAILED DESCRIPTION

According to one aspect, there is provided a computer implemented method comprising:
storing a first set of data items in an encrypted manner, the first set of data items comprising a first data item stored in an encrypted manner using a first final cryptographic key and a second data item stored in an encrypted manner using a second final cryptographic key, wherein the first final cryptographic key is protected through a chain of encryption by a master key and the second final cryptographic key is protected through a chain of encryption by the master key; and
storing a second set of one or more data items in an encrypted manner, the second set of one or more data items comprising a third data item stored in an encrypted manner using a third final cryptographic key, wherein the third final cryptographic key is protected through a chain of encryption by the master key.

In one example, the method further comprising:
storing a first first level cryptographic key from a first set of cryptographic keys and a second first level cryptographic key from a second set of cryptographic keys in an encrypted manner using the master key;
wherein the first set of cryptographic keys comprises the first final cryptographic key and the second final cryptographic key, wherein each key in the first set of cryptographic keys other than the first first level cryptographic key is stored in an encrypted manner using another key from the first set of keys whereby the first set of data items are protected through a chain of encryption by the first first level cryptographic key; and
wherein the second set of cryptographic keys comprises the third final cryptographic key, wherein each key in the second set of cryptographic keys other than the second first level cryptographic key is stored in an encrypted manner using another key from the second set of keys whereby the second set of one or more data items is protected through a chain of encryption by the second first level cryptographic key.

According to another aspect, there is provided a computer implemented method comprising:
storing a first first level cryptographic key from a first set of cryptographic keys and a second first level cryptographic key from a second set of cryptographic keys in an encrypted manner using a master key;
storing a first set of data items in an encrypted manner, the first set of data items comprising a first data item stored in an encrypted manner using a first final cryptographic key from the first set of cryptographic keys and a second data item stored in an encrypted manner using a second final cryptographic key from the first set of cryptographic keys, wherein each key in the first set of cryptographic keys other than the first first level cryptographic key is stored in an encrypted manner using another key from the first set of keys whereby the first set of data items are protected through a chain of encryption by the first first level cryptographic key; and
storing a second set of one or more data items in an encrypted manner, the second set of one or more data items comprising a third data item stored in an encrypted manner using a third final cryptographic key from the second set of cryptographic keys, wherein each key in the second set of cryptographic keys other than the second first level cryptographic key is stored in an encrypted manner using another key from the second set of keys whereby the second set of one or more data items is protected through a chain of encryption by the second first level cryptographic key.

In one example, each each data item in the first and second sets is encrypted under its own final key, where these final keys are stored in an encrypted manner using an encryption tree with a master key at the root.

In an example, the first data item is stored in a first storage component, and the first data item is encrypted with a key that is only used in the first storage component to encrypt the first data item and is not used to encrypt any other data item.

In one example, storing the second set of data items comprises storing a fourth data item in an encrypted manner using a fourth final cryptographic key, wherein the fourth final cryptographic key is in the second set of cryptographic keys.

In one example, storing the first set of data items comprises storing a fourth data item in an encrypted manner using a fourth final cryptographic key, wherein the fourth final cryptographic key is in the first set of cryptographic keys, and wherein the first set of cryptographic keys further comprises a first higher level cryptographic key and a second higher level cryptographic key and wherein the first final cryptographic key and the a second final cryptographic key are stored in an encrypted manner using the first higher level cryptographic key and the fourth final cryptographic key is stored in an encrypted manner using the second higher level cryptographic key.

In one example, each key in the first set of cryptographic keys and the second set of cryptographic keys other than the final cryptographic keys is used to encrypt a maximum of L cryptographic keys, where L is a positive integer greater than or equal to 2.

In one example, storing the second set of data items further comprises:
identifying a higher level key that is used to encrypt less than L cryptographic keys;
generating a fourth final cryptographic key and storing a fourth data item in an encrypted manner using the fourth final cryptographic key, wherein the fourth final cryptographic key is in the second set of cryptographic keys;
encrypting the fourth final cryptographic key with the identified higher level cryptographic key.

In one example, storing the second set of data items further comprises:
selecting a final key in the second set of cryptographic keys;
generating a fourth final cryptographic key and storing a fourth data item in an encrypted manner using the fourth final cryptographic key, wherein the fourth final cryptographic key is in the second set of cryptographic keys;
generating a new higher level cryptographic key in the second set of cryptographic keys;
storing the selected final key and the fourth final key in an encrypted manner using the new higher level key;
storing the new higher level key in an encrypted manner using the cryptographic key previously used to store the selected final key in an encrypted manner.

In one example, the final key is selected as a key protected by an encryption chain having a number of encryptions less than or equal to all other encryption chains.

In one example, the first and second set of data items are stored in a storage module comprising a first set of one or more storage components and a second storage component, wherein the master key is stored in the second storage component and wherein the data items are stored in the first set of one or more storage components.

In one example, the method further comprising:
accessing the first data item, comprising:
decrypting the first first level cryptographic key using the master key;
decrypting the first final cryptographic key, comprising decrypting each further key in the chain of encryption protecting the first data item; and
decrypting the first data item using the first final cryptographic key.

In one example, the method further comprises:
deleting the first data item;
deleting the first final cryptographic key;
deleting a first plurality of cryptographic keys that protect the first data item through a chain of encryption, the first plurality of cryptographic keys including the master key and the first first level cryptographic key from the first set of cryptographic keys, and generating a second plurality of cryptographic keys to replace the first plurality of cryptographic keys; and re-encrypting, using a key from the second plurality of cryptographic keys, any further cryptographic keys that were stored in an encrypted manner using a cryptographic key from the first plurality of cryptographic keys.

According to another aspect, there is provided a carrier medium comprising computer readable code configured to cause a computer to perform any of the above described methods. The methods are computer-implemented methods. Since some methods in accordance with embodiments can be implemented by software, some embodiments encompass computer code provided on any suitable carrier medium. The carrier medium can comprise any storage medium such as a CD ROM, a magnetic device or a programmable memory device, or any transient medium such as any signal e.g. an electrical, optical or microwave signal. The carrier medium may comprise a non-transitory computer readable storage medium.

According to another aspect, there is provided an apparatus, comprising a storage module configured to store:
a first set of data items in an encrypted manner, the first set of data items comprising a first data item stored in an encrypted manner using a first final cryptographic key and a second data item stored in an encrypted manner using a second final cryptographic key, wherein the first final cryptographic key is protected through a chain of encryption by a master key and the second final cryptographic key is protected through a chain of encryption by the master key; and
a second set of one or more data items in an encrypted manner, the second set of one or more data items comprising a third data item stored in an encrypted manner using a third final cryptographic key, wherein the third final cryptographic key is protected through a chain of encryption by master key.

According to another aspect, there is provided an apparatus, comprising a storage module configured to store:
a first first level cryptographic key from a first set of cryptographic keys and a second first level cryptographic key from a second set of cryptographic keys in an encrypted manner using a master key;
a first set of data items in an encrypted manner, the first set of data items comprising a first data item stored in an encrypted manner using a first final cryptographic key from the first set of cryptographic keys and a second data item stored in an encrypted manner using a second final cryptographic key from the first set of cryptographic keys, wherein each key in the first set of cryptographic keys other than the first first level cryptographic key is stored in an encrypted manner using another key from the first set of keys whereby the first set of data items are protected through a chain of encryption by the first first level cryptographic key; and
a second set of one or more data items in an encrypted manner, the second set of one or more data items comprising a third data item stored in an encrypted manner using a third final cryptographic key from the second set of cryptographic keys, wherein each key in the second set of cryptographic keys other than the second first level cryptographic key is stored in an encrypted manner using another key from the second set of keys whereby the second set of one or more data items is protected through a chain of encryption by the second first level cryptographic key.

In one example, the apparatus is a hardware security module.

In one example, the storage module comprises a first set of one or more storage components and a second storage component, wherein the master key is stored in the second storage component and wherein the data items are stored in the first set of one or more storage components.

In one example, the second storage component has reduced data remanence compared to the first set of one or more storage components.

In one example, the second storage component is an FRAM memory component.

In one example, the second storage component comprises effaceable storage.

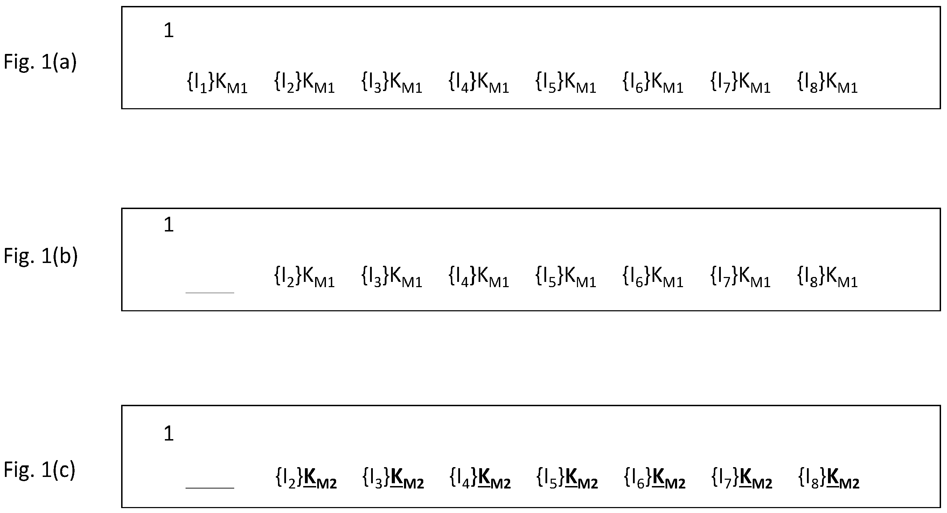

Items of data stored in disk volumes or databases may be encrypted using a master key, using keys which are encrypted for storage using a master key, or using keys derived from a master key. For example, each item of data may be encrypted by a master key. Figure 1(a) is a schematic illustration of a data storage component 1, in which a number of data items I₁ to I₈ are stored in an encrypted manner. In particular, each data item I₁ to I₈ is encrypted with a first master key K_{M1}. The master key K_{M1} may be stored in a separate location.

Figure 1(b) shows a schematic illustration of the data storage component in which the first data item I₁ has been deleted. However, a backup copy of the encrypted first data item {I₁}K_{M1} may still be stored, for example in a separate device. The data item I₁ may therefore still be accessible to a party who gains access to the master key K_{M1}. Thus even if the first item of data is deleted from the data storage component, any backup copies of the encrypted data are still readable until the master key has been changed. This means that data items may not be truly "deleted" until the master key is changed.

Similarly, even if the data items are encrypted with individual keys derived from the master key, any backup copies of the encrypted data may still be readable until the master key has been changed. Similarly, even if the data items are encrypted with individual keys stored in encrypted form using the master key, any backup copies of the encrypted data may still be readable from backup copies of the stored encrypted keys until the master key has been changed.

To change the master key, in this example, all the remaining data items I₂ to I₈ are decrypted using the first master key K_{M1}, and re-encrypted with a new master key K_{M2}. The first master key K_{M1} can then be deleted. This can be a computationally expensive process, particularly where large volumes of data are encrypted using the master key. Figure 1(c) shows a schematic illustration of the data storage component 1, in which the remaining data items I₂ to I₈ are encrypted using the new master key K_{M2}. The new master key K_{M2} is shown in bold and underline. The apparatus relies on periodic master key rollover for data destruction.

In the below described examples, each data item is encrypted with a different encryption key. These encryption keys, that directly encrypt the data items, are referred to throughout as "final" encryption keys. The final encryption keys are themselves stored in an encrypted manner using a "tree" structure of encryption keys, with a single master key at the top of the tree. As will be described in relation to the below examples, this tree arrangement, and the process for selectively updating the encryption keys within the tree, allows data items to be securely deleted without re-encryption of the whole storage volume. In particular, a method of deleting a data item comprises destroying the corresponding final encryption key, then replacing all the keys in the hierarchy which could be used to recover that final encryption key. Finally, the master key is replaced. Secure deletion of data items can therefore be performed quickly. The tree of encryption keys allows key updates to be performed in a computationally efficient manner.

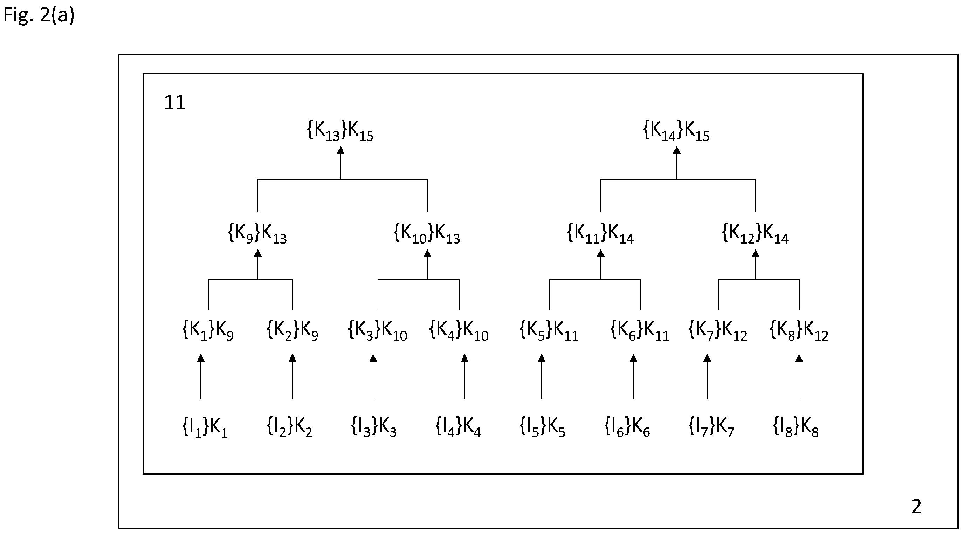

Figure 2(a) is a schematic illustration of a device 2 according to an embodiment, comprising a first data storage component 11 in which a number of data items I₁ to I₈ are stored.

In this example, each data item I₁ to I₈ is encrypted with its own final key K₁ to K₈ and stored on the data storage component 11 in encrypted form. The encryption keys in this example are symmetric keys. The first data item I₁ is stored in an encrypted manner using a first final key K₁, the second data item I₂ is stored in an encrypted manner using a second final key K₂ and so on, until the eighth data item I₈ is stored in an encrypted manner using an eighth final key K₈. In this example, eight data items are shown for simplicity, however it is to be understood that any number of data items may be stored in this manner in the first storage component 11.

In this example, there is a first set of data items, comprising four data items I₁ to I₄, and a second set of data items, comprising four data items I₅ to I₈. The first set of data items is protected through a chain of encryption by a first level cryptographic key K₁₃, also referred to here as the thirteenth key. A first set of cryptographic keys comprises the thirteenth key K₁₃, the ninth key K₉, the tenth key K₁₀, the first key K₁, the second key K₂, the third key K₃ and the fourth key K₄. As will be described below, each key in the first set of cryptographic keys other than the first level cryptographic key K₁₃ is stored in an encrypted manner using another key from the first set of keys in a chain of encryption. The second set of data items is protected through a chain of encryption by a second first level cryptographic key K₁₄, also referred to here as the fourteenth key. A second set of cryptographic keys comprises the fourteenth key K₁₄, the eleventh key K₁₁, the twelfth key K₁₂, the fifth key K₅, the sixth key K₆, the seventh key K₇ and the eighth key K₈. As will be described below, each key in the second set of cryptographic keys other than the second first level cryptographic key K₁₄ is stored in an encrypted manner using another key from the second set of keys in a chain of encryption. The first first level cryptographic key K₁₃ and the second first level cryptographic key K₁₄ are stored in an encrypted manner using a master key K₁₅.

In more detail, the final keys K₁ to K₈ used to encrypt the plurality of data items I₁ to I₈ are themselves encrypted with a higher-level encryption key and stored in the data storage component 11. The term "higher level" key is used here to indicate that the key is used to encrypt another key - a key is referred to as being "higher level" than the key that it encrypts. The keys used to encrypt the data items are referred to as being "final" keys. The keys that are encrypted by the master key are referred to as being "first level" keys. The keys that are encrypted by the first level keys are referred to as being "second level" keys and so on. In this example, the final keys are all third level keys. In other examples, some of the final keys may be a different level to other final keys.

In this example, in the first set of keys, the first key K₁ (a third level key- in this example a final key) is stored on the data storage component 11 in an encrypted manner, using a ninth key K₉ (which is a second level key). The second key K₂ (a third level key- in this example a final key) is stored on the data storage component 11 in an encrypted manner, also using the ninth key K₉. The third key K₃ (a third level key- in this example a final key) is stored on the data storage component 11 in an encrypted manner, using a tenth key K₁₀ (which is a second level key). The fourth key K₄ (a third level key- in this example a final key) is stored on the data storage component 11 in an encrypted manner, also using the tenth key K₁₀. The ninth key K₉ (a second level key) is stored on the data storage component 11 in an encrypted manner, using the thirteenth key K₁₃ (the first first level key). The thirteenth key is referred to here as a first level key, since it is encrypted by the master key. The ninth key is referred to here as second level key, since it is encrypted by a first level key. The tenth key K₁₀ (a second level key) is stored on the data storage component 11 in an encrypted manner, also using the thirteenth key K₁₃. The thirteenth key K₁₃ is stored on the data storage component 11 in an encrypted manner, using the master key K₁₅. The first set of cryptographic keys comprises the thirteenth key K₁₃, the ninth key K₉, the tenth key K₁₀, the first key K₁, the second key K₂, the third key K₃ and the fourth key K₄. Each of the ninth key K₉, the tenth key K₁₀, the first key K₁, the second key K₂, the third key K₃ and the fourth key K₄ is stored in an encrypted manner using another key from the first set of keys in a chain of encryption. In this example, the keys form a binary chain, so that the first level key encrypts two further keys, each of those further keys may encrypt two more further keys and so on. At each point in the chain, the plaintext of a key is encrypted with another key from the first set. In this example, each key from the first set other than the final keys encrypts one or two keys.

In the second set of keys, the fifth key K₅ (a third level key - also a final key in this example) is stored on the data storage component 11 in an encrypted manner, using an eleventh key K₁₁ (a second level key) and so on, until the eighth key K₈ (a third level key- also a final key in this example) which is stored on the data storage component 11 in an encrypted manner, using a twelfth key K₁₂ (also a second level key). The eleventh key K₁₁ (a second level key) is stored on the data storage component 11 in an encrypted manner, using the fourteenth key K₁₄ (the second first level key). The twelfth key K₁₂ (a second level key) is stored on the data storage component 11 in an encrypted manner, also using the fourteenth key K₁₄. The fourteenth key K₁₄ is stored on the data storage component 11 in an encrypted manner, also using the master key K₁₅. The second set of cryptographic keys comprises the fourteenth key K₁₄, the eleventh key K₁₁, the twelfth key K₁₂, the fifth key K₅, the sixth key K₆, the seventh key K₇ and the eighth key K₈. Each of the eleventh key K₁₁, the twelfth key K₁₂, the fifth key K₅, the sixth key K₆, the seventh key K₇ and the eighth key K₈ is stored in an encrypted manner using another key from the second set of keys in a chain of encryption. In this example, the keys form a binary chain, so that the first level key encrypts two further keys, each of those keys may encrypt two more further keys and so on. At each point in the chain, the plaintext of a key is encrypted with another key from the second set. In this example, each key from the second set other than the final keys encrypts one or two keys.

In this example, each pair of final keys are stored in an encrypted manner using the same higher level encryption key. However, it is to be understood that in other examples, three or more final keys may be stored using the same higher level key. Furthermore, different numbers of final keys may be stored using each higher level key.

This storage structure forms a "tree" of stored encryption keys, with a single master key at the top. The master key is K₁₅ in this example. The master key is stored in a separate storage component, also referred to here as a second storage component (not shown). The second storage component may be part of the device 2 or a separate device.

In this example, the third level keys are the final keys used to encrypt the data. However, it will be understood that in examples in which there are many more data items, many more levels of keys may be stored in the encrypted tree structure. The number of levels may also be reduced by encrypting more keys with a single higher level key, for example, each higher level key can be used to encrypt three or more keys from the lower level.

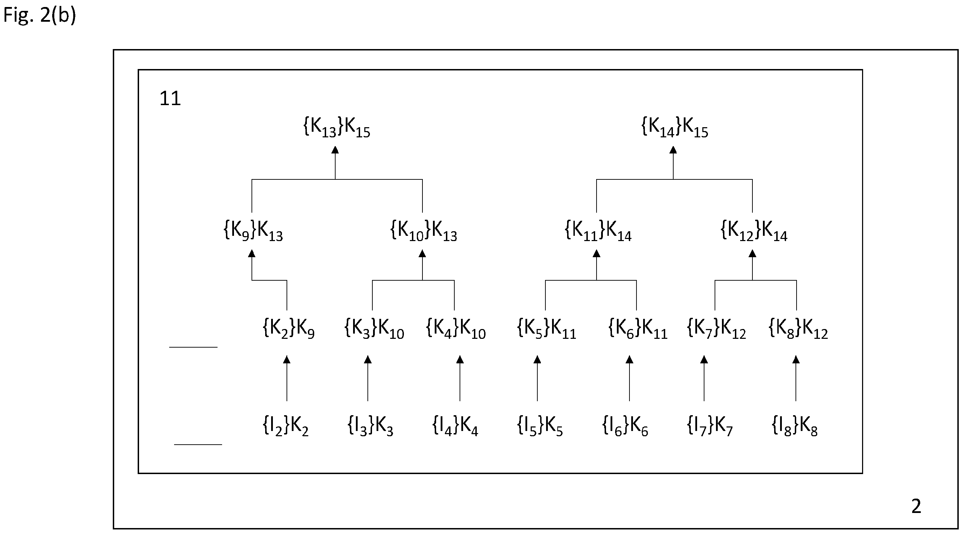

To securely delete the first data item I₁, both the encrypted first data item, {I₁}K₁, and the encrypted copy of the final key used to encrypt the data item, {K₁}K₉, are first deleted from the storage component 11. This is shown in Figure 2(b).

A first plurality of cryptographic keys is then replaced with a second plurality of cryptographic keys. In this step, any cryptographic keys that protect the first data item I₁ through a chain of encryption are replaced. A new master key, the eighteenth key K₁₈, is generated and stored. A new first level key (the seventeenth key K₁₇) is encrypted with the new master key, the eighteenth key K₁₈, and stored as {K₁₇}K₁₈. A new second level key (sixteenth key K₁₆) is encrypted with the new first level key (the seventeenth key K₁₇) and stored as {K₁₆}K₁₇.

Any further cryptographic keys that were stored in an encrypted manner using the first plurality of cryptographic keys are also re-encrypted with a key from the second plurality of cryptographic keys. In this example, the other final encryption key(s) stored using the same higher level (in this example the same second level) encryption key are re-encrypted with the new second level encryption key K₁₆. In this example, this means that the second key K₂ is decrypted using the ninth key K₉ and then re-encrypted using the new second level key, the sixteenth key K₁₆. This is stored as {K₂}K₁₆. Any other second level keys encrypted with the old first level key (the thirteenth key K₁₃), are then decrypted using the thirteenth key K₁₃ and re-encrypted using the new first level key (the seventeenth key K₁₇). In this example, the tenth key K₁₀ is decrypted and re-encrypted with the seventeenth key K₁₇. This is stored as {K₁₀}K₁₇. All first level cryptographic keys, i.e. all keys encrypted with the old master key, are then decrypted with the old master key K₁₅ and re-encrypted with the new master key K₁₈. In this example, the fourteenth key K₁₄ is decrypted and re-encrypted to be stored as {K₁₄}K₁₈.

As mentioned above, the old master key K₁₅ is deleted and the new master key K₁₈ stored in the separate storage component. The new master key may overwrite the old master key. The encrypted old second level key (the ninth key) {K₉}K₁₃, and the encrypted first first level key (the thirteenth key) may also be deleted.

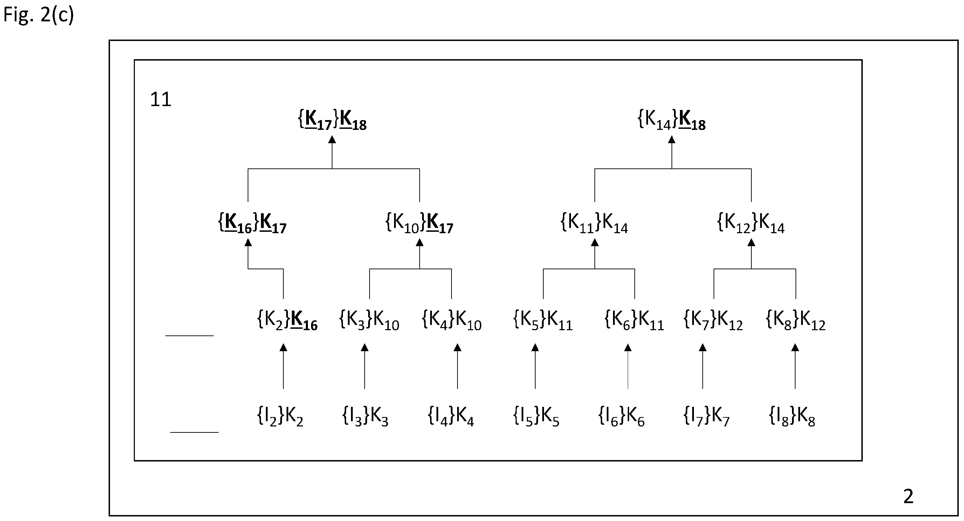

Figure 2(c) is a schematic illustration of the device 2, in which the first data item I₁ has been securely deleted. The new keys which are generated as part of the deletion process, i.e. the sixteenth key, seventeenth key and eighteenth key as described above, are shown in bold and underline.

Since the old master key K₁₅ is deleted, any backup copy of the first data item I₁ will no longer be accessible. Furthermore, instead of performing seven decryption and encryption operations on the data items to change the master key, three decryption and encryption operations are performed on stored cryptographic keys (K₂, K₁₀ and K₁₄), three new cryptographic keys are generated (K₁₆, K₁₇ and K₁₈), and two of these new cryptographic keys are also encrypted for storage (K₁₆ and K₁₇), as has been outlined above. A smaller number of operations may be performed. Furthermore, in some cases decryption and encryption of cryptographic keys may be more computationally efficient than decryption and encryption of the data items. For example, a cryptographic key may comprise 16 to 32 bytes of data, whereas each data item may be Gigabytes of data for example (depending on the data item).

In the arrangement of Figure 2(a), two lower-level keys are encrypted by one higher-level key. For example, the ninth key K₉ (a second level key) is stored on the data storage component 11 in an encrypted manner, using a thirteenth key K₁₃ (a first level key), and the tenth key K₁₀ (a second level key) is stored on the data storage component 11 in an encrypted manner, also using the thirteenth key K₁₃. In this arrangement, the number of levels (i.e. excluding the data items) is log₂(N), where N is the number of data items. In Figure 2(a), there are 8 data items, and therefore 3 levels of keys. In this example, a maximum of one encryption operation at the final level and two encryption operations at each level above the final level are performed in order to securely delete a data item - in the example these are the encryptions previously using K₉, K₁₃ and K₁₅. In such an arrangement, the maximum number of new key encryptions performed in order to delete a data item is ((Iog₂N) -1), with each encryption operation encrypting one keys' amount of data (for example 16 bytes). The number of new keys generated in order to delete a data item is (log₂N). There are ((Iog₂N) -1) new key encryptions, where each new key is encrypted with its higher-level key (the new master key then being stored). There are also (log₂N) re-encryptions, i.e. decryption then encryption of existing keys - one at each level. Thus the total operations performed comprises (log₂N) decryptions and 2((log₂N) -1) encryptions.

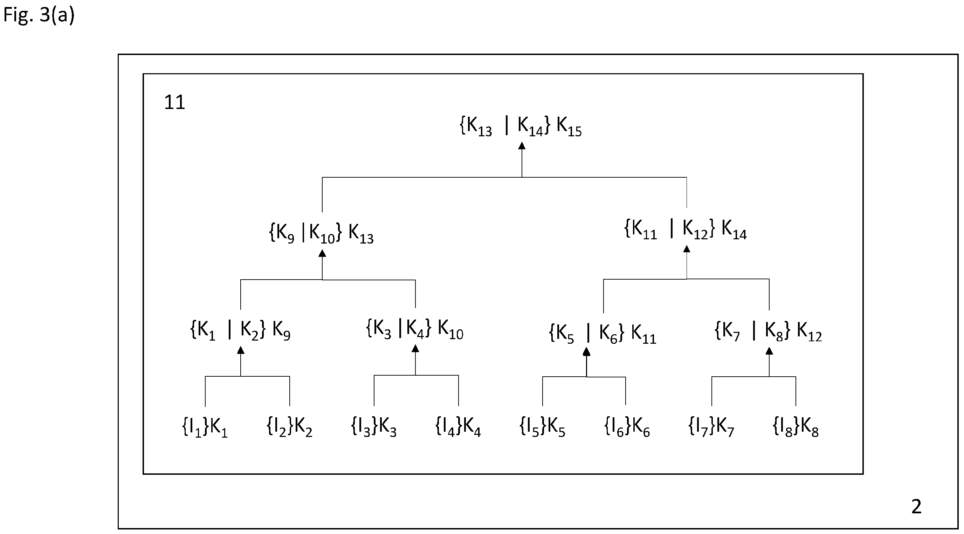

Figure 3(a) is a schematic illustration of a device 2 according to another embodiment, comprising a first data storage component 11 in which a number of data items I₁ to I₈ are stored in an alternative arrangement. In this example, a single plaintext containing two cryptographic keys is encrypted and stored, rather than encrypting each key individually as its own plaintext.

The keys K₁ to K₈ are used to encrypt the plurality of data items I₁ to I₈ in the same manner as described in relation to Fogure 2(a). In this example, the first key K₁ (a final key) is concatenated with the second key K₂ (a final key) and the result stored on the data storage component 11 in an encrypted manner, using the ninth key K₉ (which is a second level key). The third key K₃ (a final key) is concatenated with the fourth key K₄ (a final key) and the result stored on the data storage component 11 in an encrypted manner, using a tenth key K₁₀ (which is a second level key), and so on. In this example, the second level encryptions are {K₁ | K₂}K₉, {K₃ | K₄}K₁₀, {K₅ | K₆}K₁₁, and {K₇ | K₈}K₁₂. Here *a* | *b* denotes data made by concatenating a and b. In this example, each pair of final keys are combined and stored in an encrypted manner using a second level encryption key. However, it is to be understood that in other examples, three or more final keys may be combined. Furthermore, different numbers of final keys may be combined and encrypted using each second level key.

The ninth key K₉ (a second level key) is concatenated with the tenth key K₁₀ (a second level key) and the result stored on the data storage component 11 in an encrypted manner, using the thirteenth key K₁₃ (a first level key). The thirteenth key K₁₃ (a first level key) is combined with the fourteenth key K₁₄ (a first level key) and the result stored on the data storage component 11 in an encrypted manner, using the master key K₁₅. Each pair of second level keys are thus combined and stored in an encrypted manner using a first level encryption key, and so on to the master key.

In this example, the first set of data items, comprising four data items I₁ to I₄, is again protected through a chain of encryption by a first first level cryptographic key K₁₃. A first set of cryptographic keys again comprises the thirteenth key K₁₃, the ninth key K₉, the tenth key K₁₀, the first key K₁, the second key K₂, the third key K₃ and the fourth key K₄. Each key in the first set of cryptographic keys other than the first first level cryptographic key K₁₃ is stored in an encrypted manner using another key from the first set of keys in a chain of encryption. The second set of data items I₅ to I₈, is protected through a chain of encryption by a second first level cryptographic key K₁₄. A second set of cryptographic keys comprises the fourteenth key K₁₄, the eleventh key K₁₁, the twelfth key K₁₂, the fifth key K₅, the sixth key K₆, the seventh key K₇ and the eighth key K₈. Each key in the second set of cryptographic keys other than the second first level cryptographic key K₁₄ is stored in an encrypted manner using another key from the second set of keys in a chain of encryption. The first first level cryptographic key K₁₃ and the second first level cryptographic key K₁₄ are stored in an encrypted manner using a master key K₁₅.

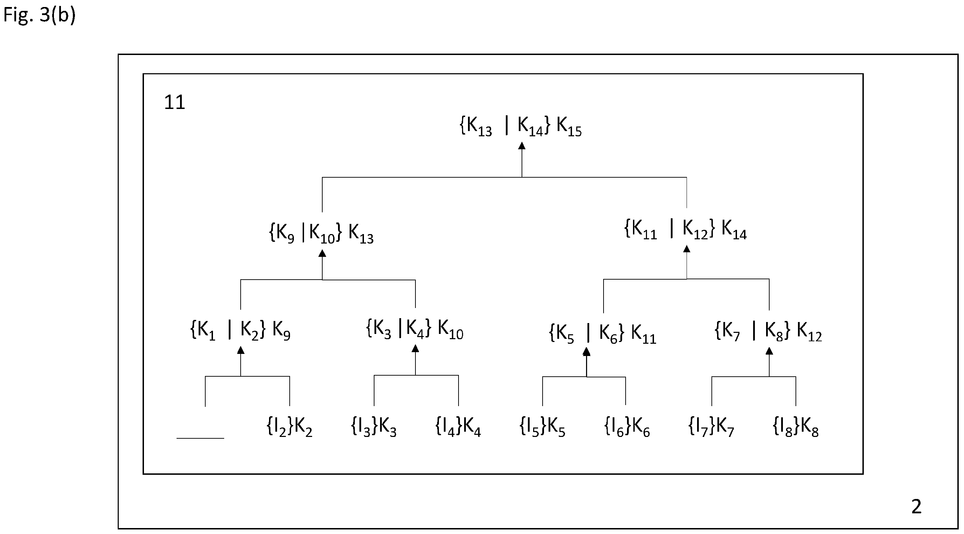

To securely delete the first data item I₁, the encrypted first data item, {I₁}K₁ is deleted from the storage component 11. This is shown in Figure 3(b).

A first plurality of cryptographic keys is then replaced with a second plurality of cryptographic keys. In this step, any cryptographic keys that protected the first data item I₁ through a chain of encryption are replaced. A new master key K₁₈ is generated and stored. A new first level key (the seventeenth key K₁₇) is generated. A new second level key (sixteenth key K₁₆) is generated.

Any further cryptographic keys that were stored in an encrypted manner using the first plurality of cryptographic keys are also re-encrypted with a key from the second plurality of cryptographic keys. Any final encryption keys stored using the same higher level key are re-encrypted with the new second level encryption key K₁₆. The encrypted copy of the first key K₁ concatenated with the second key K₂, {K₁ | K₂}K₉, is decrypted, the second key K₂ extracted. The extracted second key K₂ is encrypted using the new second level key, the sixteenth key K₁₆. This is stored as {K₂}K₁₆.

The new second level key (sixteenth key K₁₆) is concatenated with the tenth key K₁₀ and the result encrypted with the new first level key (the seventeenth key K₁₇) and stored as {K₁₆ | K₁₀}K₁₇. In this stage, the encrypted old second level key (the ninth key) concatenated with the tenth key K₁₀ {K₉ | K₁₀}K₁₃, is decrypted, and the tenth key K₁₀ extracted.

The new first level key (seventeenth key K₁₇) is concatenated with the fourteenth key K₁₄ and the result encrypted with the new master key (the eighteenth key K₁₈) and stored as { K₁₇ | K₁₄}K₁₈. In this stage, the encrypted old first level key (the thirteenth key) concatenated with the fourteenth key K₁₄, {K₁₃ | K₁₄}K₁₅, is decrypted, and the fourteenth key K₁₄ extracted.

The old master key K₁₅ can be deleted and the new master key K₁₈ stored in the separate storage component. Finally the old second level key (the ninth key) K₉ and the encrypted first first level key (the thirteenth key) are deleted . In particular, the encrypted thirteenth key {K₁₃ | K₁₄}K₁₅ , the encrypted ninth key {K₉ | K₁₀}K₁₃ and the encrypted first key {K₁ | K₂}K₉ are deleted from the storage component 11.

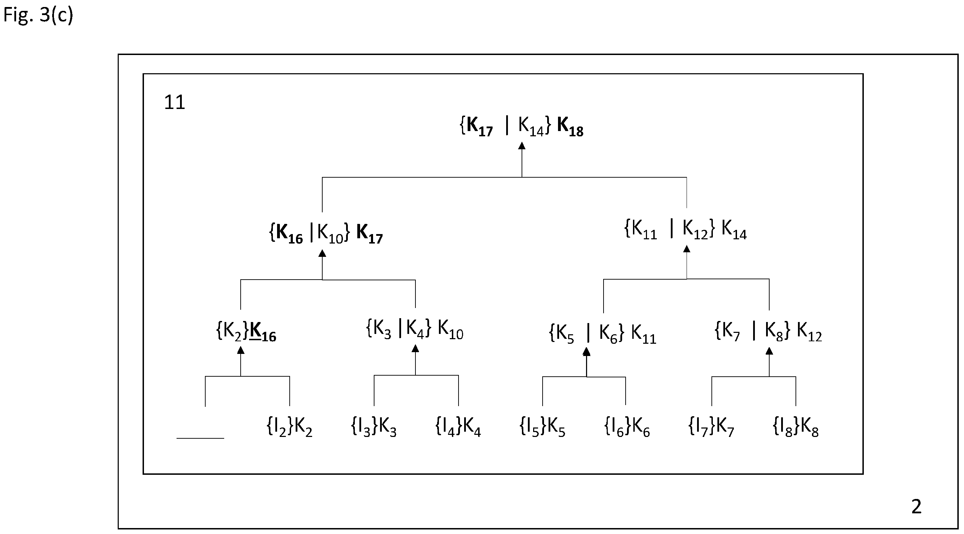

Figure 3(c) is a schematic illustration of the device 2, in which the first data item I₁ has been securely deleted. The new keys which are generated as part of the deletion process, i.e. the sixteenth key, seventeenth key and eighteenth key as described above, are shown in bold and underline.

In this example, three decryption operations are performed, three new cryptographic keys are generated (K₁₆, K₁₇ and K₁₈), and three encryption operations are performed. as has been outlined above. Using such an encryption chain, a maximum of one encryption operation at each level is performed during the deletion process for one item of data. In such an arrangement, the maximum number of encryptions performed in order to delete a data item is log₂N, with each encryption operation encrypting no more than two keys' amount of data (for example 32 bytes).

For some apparatus, depending on the speed of encryption relative to other operations, it may be more efficient for more than two keys to be encrypted by a higher-level key. If four keys were combined (e.g. { K₁ | K₂ | K₃ | K₄} and encrypted by a higher level key, the number of levels in the arrangement is log₄N.

The encryption of the data items described in relation to Figure 2(a) and 3(a) may be performed using symmetric key encryption, in other words the final keys including the first cryptographic key K₁ are symmetric keys. The encryption and decryption may use the AES (advance encryption standard) algorithm for example. The encryption and decryption may use an encryption mechanism such as AES-GCM (AES with Galois/Counter Mode), which also detects attempts to tamper with the data. The final keys may be 16, 24 or 32 bytes for example. The encryption of the final cryptographic keys and higher level cryptographic keys may also be performed using a symmetric key encryption algorithm, in other words the higher level keys and master key are also symmetric keys for encryption and decryption. The encryption and decryption may use the AES algorithm for example. The encryption and decryption may use an encryption mechanism such as AES-GCM. The higher level keys and master key may be 16, 24 or 32 bytes for example.

In the above described examples, the encrypted data items and encrypted keys are stored on a first storage component, with the master key being stored in a second storage component. However, in some other examples, the encrypted data items and encrypted keys may be stored across multiple first components. For example, the encrypted data items may be stored on one first component, with the encrypted keys stored on another first component. Alternatively, some of the encrypted keys may be stored on one first component, with others on another first component. In some examples, some of the encrypted keys may be stored with the master key on the second storage component. For example, the master key and the encrypted keys in the first level, the level below the master key, may be stored in the second storage component, with the remaining encrypted keys and encrypted data items being stored on the first storage component.

The second storage component may use a different storage technology to the first storage component. For example, the second storage component may use a storage technology that ensures that when data stored on it is erased or overwritten, it cannot later be recovered by an adversary.

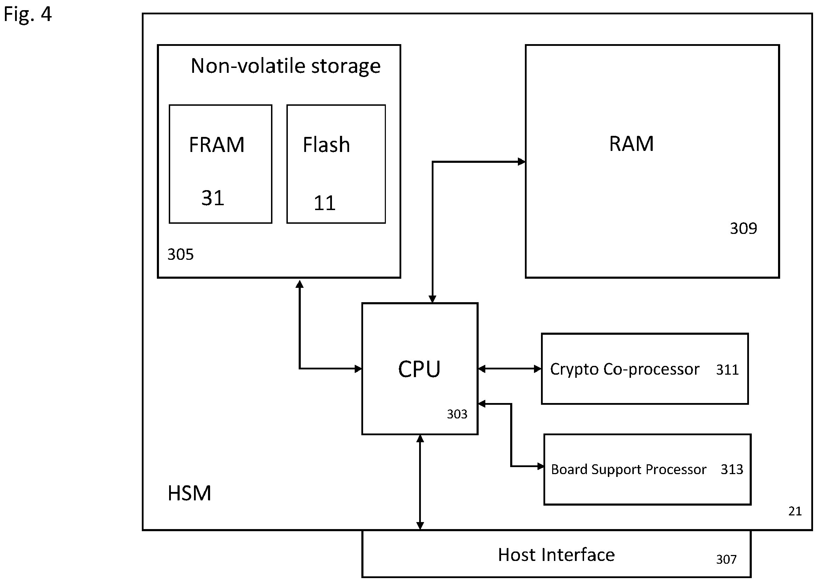

Figure 4 is a schematic illustration of a device 21 in accordance with an embodiment. The device 21 is a hardware security module device 21. The hardware security module 21 may be used to securely store and manage data for a client. The term client is used throughout the description to refer generally to a user of a HSM device.

The HSM 21 may be resistant to tamper by a third party, for example by the inclusion of physical security such as a membrane that covers the entire device, that cannot be removed without destroying the underlying physical hardware, thus making it unusable.

The HSM 21 comprises a processing unit. In this example the HSM 21 comprises a central processing unit (CPU) 303 which is configured to execute programs stored in memory on the HSM 21. In some other examples, the processing unit may comprise a field programmable gate array (FPGA) or an application specific integrated circuit (ASIC) for example.

The programs are referred to as "the main cryptographic application" or the "firmware" in the below description, however generally the programs comprise a set of computer instructions stored in non-volatile memory on the HSM device 21 and embodying the functionality as will be described in relation to the "firmware" below. The computer instructions, or firmware, may be written in any of a number of programming languages, and may be stored on the HSM device 21 as compiled code. The firmware can be embedded in the hardware security module 21 when manufactured, or can be provided, as a whole or in part, after manufacture. For instance, the firmware can be introduced as a computer program product, which may be in the form of a download. Alternatively, modifications to existing firmware can be made by an update, or plug-in.

The processor 303 runs an operating system, for example a Linux operating system. However, it is understood that the processor could run other operating systems, such as Windows or an embedded operating system, such as QNX or VxWorks. The operating system comprises system software that manages the hardware and software resources of the HSM device 21, and acts as an intermediary between the firmware (and other applications) and the HSM hardware.

The HSM device 21 is located in a host system (not shown). The HSM 21 is communicatively coupled to a computing device in the host system, referred to as the host computing device, via host interface 307. The host computing device may be a computer or server device for example. For example, the HSM device 21 may be a PCI-express card, directly plugged in to a PCI-express card slot of the host system device. Alternatively, the HSM device 21 can be coupled by a USB connection for example. CPU 303 is configured to receive user requests through host interface 307. The processor 303 accesses the interface 307. The interface 307 may be a single component or may comprise various components. The host interface may comprise a communication port, which provides a PCI-e bus connection to the host computing device for example.

The host system may be a service provider system. The host system may comprise a large number of HSM devices coupled to the host computing device. A client system, which is separate to the host system, is located remotely from the host system. The client system comprises a client computing device. The client system is communicatively coupled to the host computing device, and thus is communicatively coupled to the HSM device 21. Communication between the client system and the host system is performed over a communication network. Communication between the client system and the host system may be performed via an Internet connection for example. Multiple clients may use the HSM 21 by connecting through the host system. A scenario in which multiple clients use the HSM 21 is also referred to as a multi-tenant scenario.

Alternatively, the host system may be a client system, with the HSM device 21 being located in the client system. In this case, a single client uses the HSM device 21.

In use, the HSM device 21 receives client requests through host interface 307. The requests may correspond to commands to write, read, overwrite or delete data items in the non-volatile storage 305 of the HSM device 21. The requests are generated using a communication protocol. In this example, the HSM device 21 runs a Linux process, also referred to as the "firmware process", which executes the commands given to it by the client. A "process" refers to a program in execution, in other words it is a running instance of the firmware. Where other embedded operating systems are used, the equivalent firmware process for the operating system runs on the HSM 21.

The data items which are to be written, read, overwritten or deleted may comprise one or more cryptographic keys associated with a client for example, which are stored and managed in the HSM 21. The keys associated with a client may comprise a Module Security World Key, which is also referred to as the "KMSW" key or "module key" in the below description. This is a symmetric key used as a root for other application keys associated with the client. There are a number of cryptographic application keys associated with the client and for use with various cryptographic functions which are embodied in the firmware process. The application keys may be securely stored outside of the HSM device 21 using the KMSW module key. The application keys may be encrypted using the Advanced Encryption Standard (AES) for example. Alternatively, Triple-DES encryption may be used. Encrypted application keys can be stored outside the HSM device 21, either on smart cards or server storage such as hard discs within the host system for example. The KMSW key is stored on the HSM device 21. A module key associated with a client may be stored on the HSM device 21 as a data item using the encryption chain structure shown in Figure 2(a) or 3(a) above for example, such that the KMSW key is protected using a master key. In a multi-tenant scenario, each data item in the encryption chain structure may comprise a module key associated with a different client.

The CPU 303 is in wired bi-directional communication with non-volatile storage 305 and in wired bi-directional communication with RAM 309. RAM 309 corresponds to operating memory of the CPU 303. The processor 303 may comprise logic circuitry that responds to and processes the instructions in code stored in the working memory 309. In particular, when executed, a program is represented as a software product, or process, stored in the working memory 309. Execution of various programs such as the firmware by the processor 303 will cause methods as described herein to be implemented.

The HSM device 21 may comprise further components such as a board support processor 313. Board support processor 313 is configured to communicate with a plurality of on-board sensors, monitoring the operation of the main CPU 303 and the other hardware components of the hardware security module 21. The sensors may include but are not limited to CPU and/or board temperature sensors, voltage and/or current sensors.

The HSM device 21 in this example further comprises a crypto accelerator 311. The crypto accelerator 311 performs specific cryptographic operations, which are implemented directly in hardware. Requests for performance of an operation are passed from the CPU 303, and the crypto accelerator 311 returns to the CPU 303 a response to the request. Although in this example, a CPU 303 and crypto co-processor 311 is shown, in some examples, the HSM processing unit may instead comprise a system on a chip FPGA (SoC FPGA), in which various specific cryptographic operations are implemented directly in the programmable logic of the SoC FPGA.

The non-volatile memory 305 in this example includes a Flash memory component 11. The Flash memory component 11 is a first storage component. Although in this example, the first storage component 11 is a Flash memory component, the first storage component 11 may alternatively be another form of non-volatile device memory such as optical disk or magnetic hard drive for example. The Flash memory component 11 stores a plurality of cryptographic keys associated with one or more clients, for example one or more KMSW keys. The keys are stored in an encrypted manner, using a hierarchy structure such as described in relation to Figure 2(a) or 3(a) for example. Each KMSW key corresponds to a data item in the hierarchy structure.

The non-volatile memory 305 further comprises a Ferroelectric Random Access Memory (FRAM) component 31. The FRAM component 31 is a second storage component. The master key used in an encryption tree structure, such as the structure described in relation to Figure 2(a) or 3(a) for example, is stored in the FRAM component 31. When a new master key is to be generated, it is also stored in the FRAM component 31. The new master key is stored in a manner that completely overwrites the old master key.

In this manner, the FRAM component 31 is different to the Flash storage component 11 - when an update is made to a data item stored in the Flash storage component 11, the new version of the data item may not completely overwrite the old version of the data item, meaning that the old version of the data item may still be readable. For example, data remanence in Flash memory means it is sometimes possible to read data back from a particular memory cell even after it has been erased. Furthermore, in some Flash storage devices, the memory cells themselves are left un-erased for as long as possible. The erasing operation wears the storage cells, which may wear out after a certain number of write-erase cycles. By applying wear levelling, the flash disk controller therefore avoids erasing the same cells where possible, by writing new data elsewhere and recording that it has moved. The result is that old data can still be stored in memory cells for a long period after an instruction to a flash disk controller to overwrite it has been actioned. In this example therefore, the master key is stored in a second storage component without such data remanence issues. The second storage component may use a different memory technology to the first storage component. Both components may be included in a single device.

In a multi-tenant scenario, if a tenant ends their relationship with a service provider, the service provider will securely delete the tenant's data from the HSM 21. However, the service provider will want to keep other tenants' data intact. By using the secure deletion methods described herein, this process can be performed efficiently, without disturbing the operation for other tenants, for example without pausing an operation while the whole Flash storage component 11 is re-encrypted. One data item may comprise a tenant's security world data, including the KMSW key and other keys associated with that tenant and stored inside the HSM. In a multi-tenancy example, the secure deletion method may be used to remove a particular tenant, obliterating their Security World data, without stopping operation and re-encrypting all the data associated with other tenants.

As described above, in this example the HSM 21 is equipped with a FRAM storage device 31 which supports the software encryption arrangements used for various data items stored in the Flash storage component 11. The master key is stored in a separate hardware component, in this example the FRAM component 31, where it can be easily replaced. In particular, an FRAM component supports frequent over-writing of the same storage area. Although in this example, the second storage component is an FRAM component 31, alternatively, the second storage component may be a non-volatile random-access memory (NVRAM) component for example, which also supports frequent over-writing of the same storage area. Other types of storage may be used.

Although an example is described above in which the device comprises both the first storage component (in this example the Flash memory 11) and the second storage component (in this example the FRAM component 31), in other examples, the first storage component may be located in a separate device to the second storage component. Furthermore, although an example is described above in which the device is a HSM, in other examples, one or both of the first storage component and the second storage component may be located in a different type of device. For example, the structure described in relation to Figure 2(a) or 3(a) for example may be used to store client application keys outside of the HSM 21. As described previously, there are a number of cryptographic application keys associated with a client and for use with various cryptographic functions which are embodied in the firmware process. The application keys may be securely stored outside of the HSM device 21 using the KMSW module key. The application keys may be encrypted using the module key. The module key is stored on the HSM device 21. The module key in this example corresponds to the master key in the encryption tree structure described in relation to Figures 2(a) and 3(a) above. In this case, the first storage component may be located in a host system computing device, and the second storage component may be located in the HSM 21. In some examples, all keys above a certain level may be stored on the HSM 21, with lower-level keys and data stored outside the HSM 21 for example. In another example, the data items and encrypted final keys may be stored outside the HSM in a first storage component, with the encrypted higher level keys stored in a second storage component in the HSM 21.

The device(s) provide a hardware and software arrangement to allow individual data items, for example files or other data items, within a storage volume or database to be securely destroyed when no longer needed.

A data item may comprise one or more cryptographic keys (for example module keys associated with tenants), a Word document or other type of text document, or other type of regular file managed by the operating system, or a customer record as a record in a database.

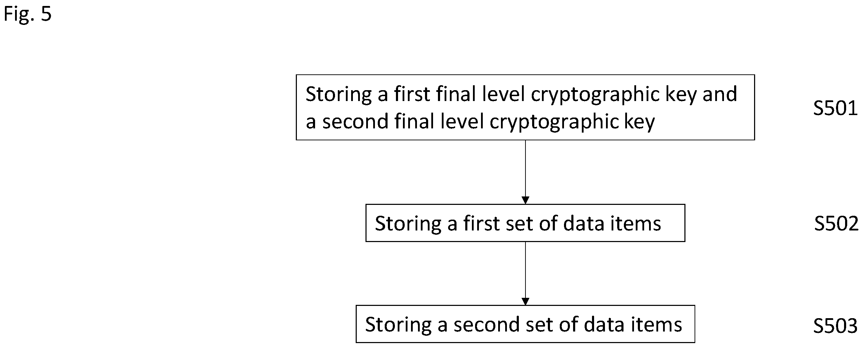

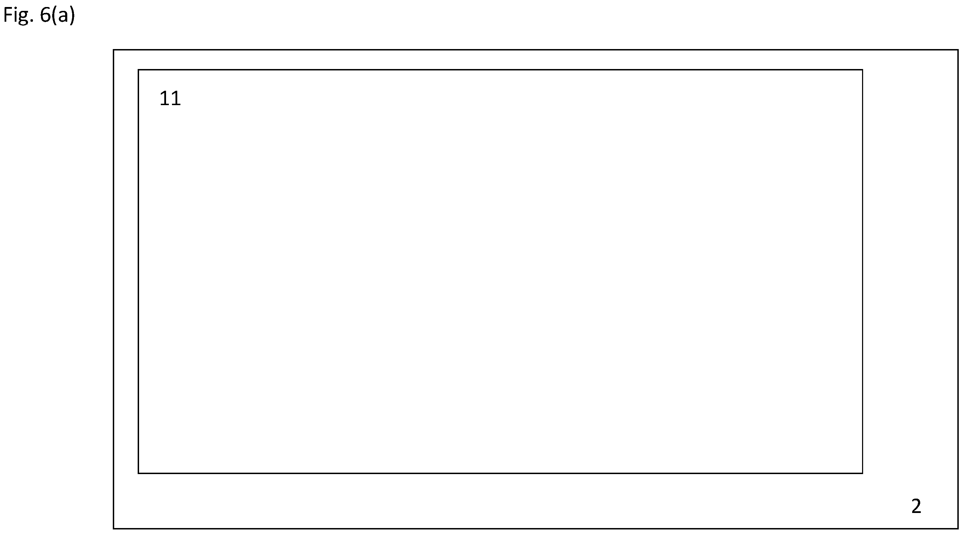

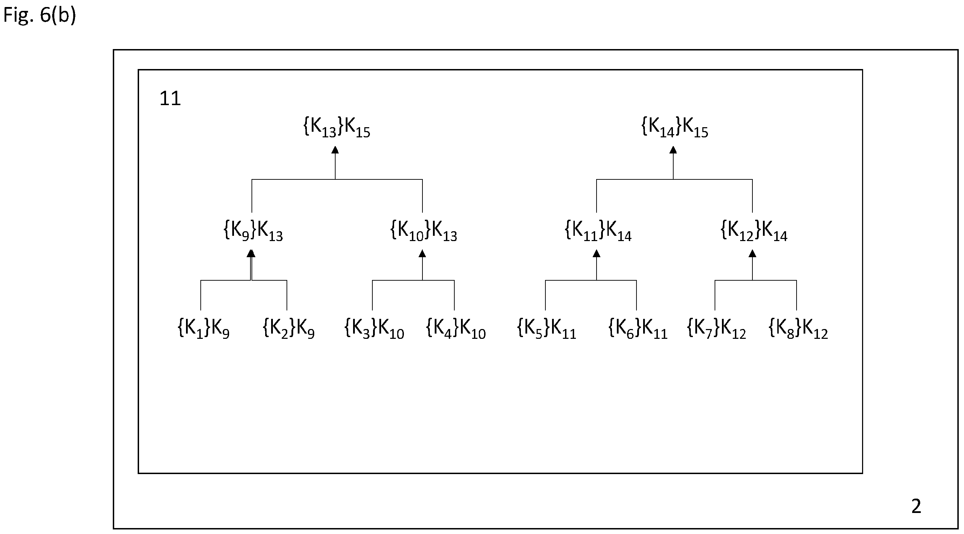

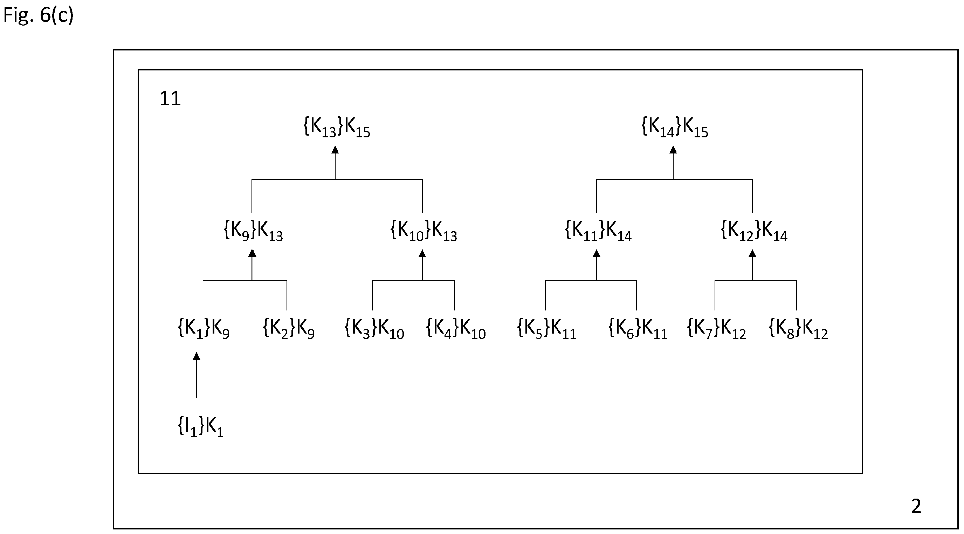

Figure 5 is a schematic illustration of a method of storing data in accordance with an embodiment. In this example, the method is described as being implemented on the HSM device 21 described in relation to Figure 4. However the method may alternatively be implemented on a different type of device. Figure 6 shows a schematic illustration of an example of the data stored in the first storage component 11 during various stages in the method. Prior to performance of the method, as shown in Figure 6(a), no data is stored on the first storage component 11.

In the method described in relation to Figure 5, a fixed tree arrangement of cryptographic keys is first stored on the first storage component in S501, with a pre-determined maximum number of keys being stored. This is shown in Figure 6(b), in which a set of cryptographic keys are generated and stored on the first storage component 11 in the tree arrangement described in relation to Figure 2(a).

In this example, in S501, a first first level cryptographic key (thirteenth key K₁₃) from a first set of cryptographic keys and a second first level cryptographic key (fourteenth key K₁₄) from a second set of cryptographic keys are stored in an encrypted manner using a master key K₁₅. The HSM 21 generates the first first level cryptographic key K₁₃, second first level cryptographic key K₁₄ and master key K₁₅ by implementing a cryptographic key generation algorithm in the firmware for example. The first first level cryptographic key K₁₃ and second first level cryptographic key K₁₄ are then encrypted using an encryption algorithm in the firmware (for example) and stored in the first storage component 11. The master key K₁₅ is stored on the second storage component.

Each key in the first set of cryptographic keys other than the first first level cryptographic key K₁₃ is also stored in an encrypted manner using another key from the first set of keys. In this example, the first cryptographic key K₁ (a final key) is encrypted with the ninth cryptographic key K₉, and the result is stored in the first storage component 11. The second key K₂ (a final key) is stored on the data storage component 11 in an encrypted manner, also using the ninth key K₉. The third key K₃ (a final key) is stored on the data storage component 11 in an encrypted manner, using a tenth key K₁₀ (which is a second level key). The fourth key K₄ (a final key) is stored on the data storage component 11 in an encrypted manner, also using the tenth key K₁₀. The ninth key K₉ (a second level key) is stored on the data storage component 11 in an encrypted manner, using the thirteenth key K₁₃ (a first level key). The tenth key K₁₀ (a second level key) is stored on the data storage component 11 in an encrypted manner, also using the thirteenth key K₁₃. The HSM 21 generates the further keys in the first set by implementing a cryptographic key generation algorithm in the firmware. The keys are then encrypted using an encryption algorithm in the firmware and stored in the first storage component 11.

Each key in the second set of cryptographic keys other than the second first level cryptographic key (K₁₄) is also stored in an encrypted manner using another key from the second set of keys. In this example, the fifth key K₅ (a final key) is stored on the data storage component 11 in an encrypted manner, using an eleventh key K₁₁ (a second level key) and so on, until the eighth key K₈ (a final key) which is stored on the data storage component 11 in an encrypted manner, using a twelfth key K₁₂ (also a second level key). The eleventh key K₁₁ (a second level key) is stored on the data storage component 11 in an encrypted manner, using the fourteenth key K₁₄ (a first level key). The twelfth key K₁₂ (a second level key) is stored on the data storage component 11 in an encrypted manner, also using the fourteenth key K₁₄. The HSM 21 generates the further keys in the second set by implementing a cryptographic key generation algorithm in the firmware. The keys are then encrypted using an encryption algorithm in the firmware and stored in the first storage component 11.

A first set of data items is then stored in an encrypted manner in S502. The first set of data items comprises a first data item I₁ stored in an encrypted manner using a first final cryptographic key K₁ from the first set of cryptographic keys and a second data item I₂ stored in an encrypted manner using a second final cryptographic key K₂ from the first set of cryptographic keys.

A second set of one or more data items is stored in an encrypted manner in S503, comprising storing a third data item (I₅) in an encrypted manner using a third final cryptographic key (the fifth key K₅) from a second set of cryptographic keys,

In this method, data items are stored encrypted with the relevant keys as the data items are provided for storage on the first storage component. For example, in order to store a first data item, in S502, the first key K₁ is decrypted for use. This involves decrypting the thirteenth key using the master key, and decrypting the ninth key using the thirteenth key. The first item of data is then encrypted with first cryptographic key and stored in the first storage component in S502. After S502, the encrypted first data item {I₁}K₁ is stored on the first storage component. This is shown in Figure 6(c). A similar process is performed to store each data item.

In one example, the first item of data is sent by a client to the HSM device 21, encrypted with a communication key which is used to secure transmission between the client and the HSM 21. The HSM 21 decrypts the first item of data using the communication key and stores it in the RAM 309. The HSM 21 decrypts the first cryptographic key K₁, by decrypting the thirteenth key using the master key, decrypting the ninth key using the thirteenth key, and decrypting the first key using the ninth key.

In particular, the master key is first retrieved from the second storage component. Any higher level keys in the same chain as the first key are then decrypted. This may be performed by implementing a cryptographic decryption algorithm in the firmware. Once decrypted, the first cryptographic key K₁ is stored in the RAM 309. The first item of data is then encrypted with the first cryptographic key K₁, and the result is stored in the first storage component, which in this example is the Flash storage component 11. A similar process is performed to store each data item.

The method described in relation to Figure 5 has a fixed limit of data items that can be stored, that depends on the pre-determined maximum number of keys. An alternative option is to use a self-balancing tree. In this scenario, the tree structure grows as more data items are provided. The growth is controlled to maintain a lower number of levels. In particular, the tree structure is adjusted as it grows, to keep it balanced, i.e. to keep the number of levels to the minimum possible number. Various self-balancing algorithms may be used.

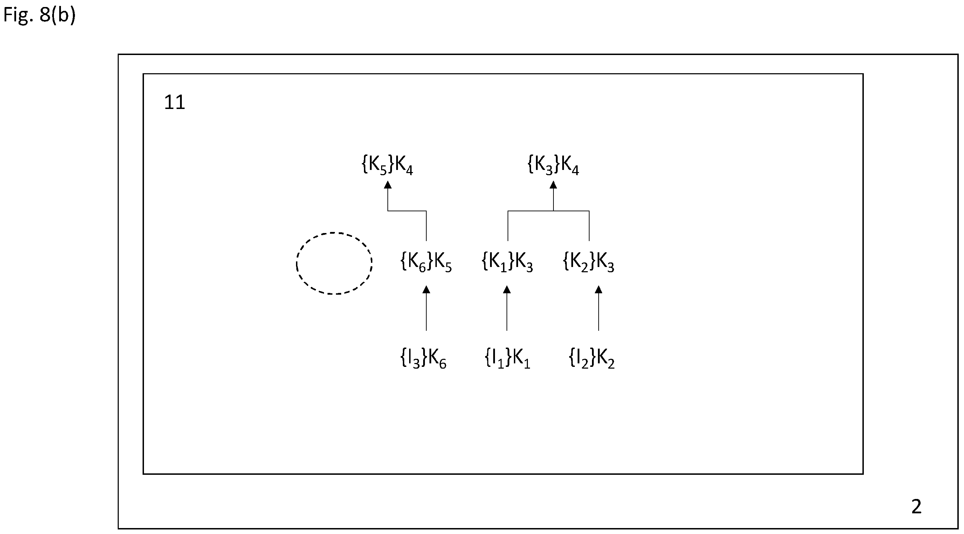

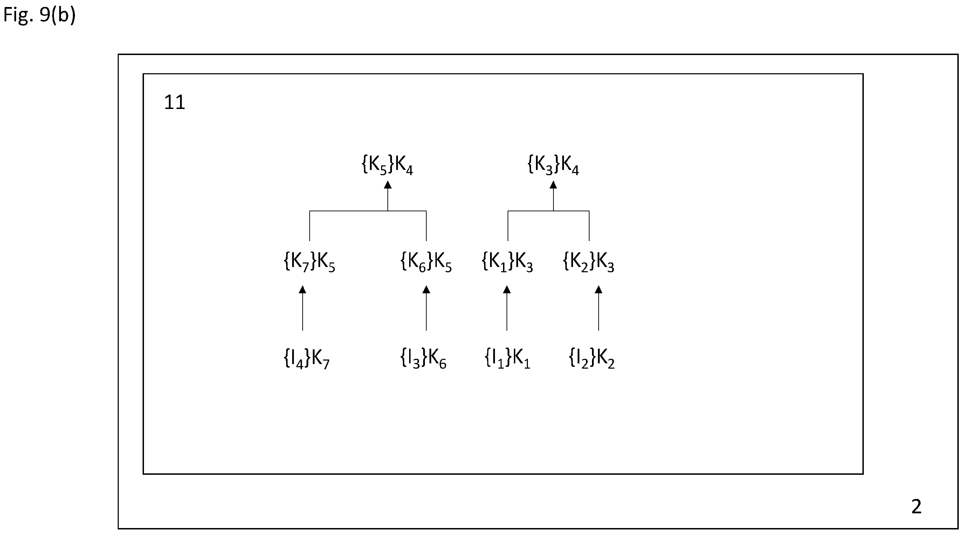

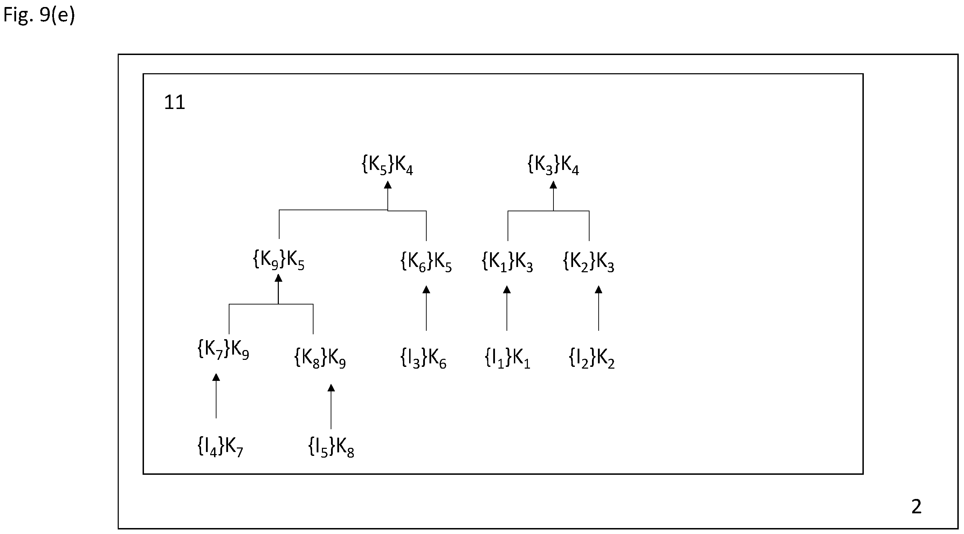

An example self-balancing algorithm may firstly look for any gaps in the tree structure. A gap corresponds to a final key which is stored but which is not currently used to encrypt a data item, or to another key which is stored but which is not currently used to encrypt the maximum number of keys. A gap may be left by a deleted item - for instance in the structure shown in Figure 3(c) above, a gap is left when data item I₁ is deleted. A gap may also be formed where a key is not currently used to encrypt the maximum number of keys - for instance in Figure 8(b) described below, the key K₅ is only used to encrypt one further key, whereas the tree structure is a binary structure, in which each key (other than the final keys) may be used to encrypt two keys. If there are no gaps, the algorithm then looks for the least deep chain of the tree on which to add the new items - for instance in the structure shown in Figure 9(e) described below, a new item would be stored in part of the tree containing item I₁, I₂ or I₃. In this step, the algorithm looks for a final key which is protected through a chain of encryption having the smallest number of levels. A new final key is then generated to store the data item on this chain. If the tree structure is 'full', i.e. all items are at the same depth and there are no gaps, an additional level is created. This is the case in the structure shown in Figure 9(b) for example. In other words, a new final key is generated to store the data item, and the item is stored on any of the existing chains. Example methods of storing a new data item using a new final key will be described below.

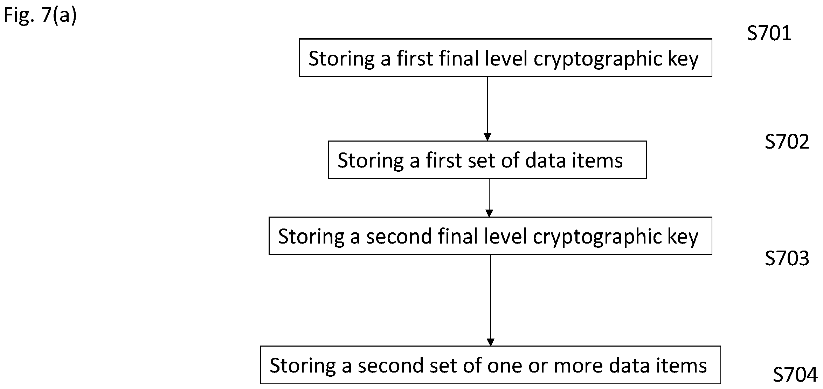

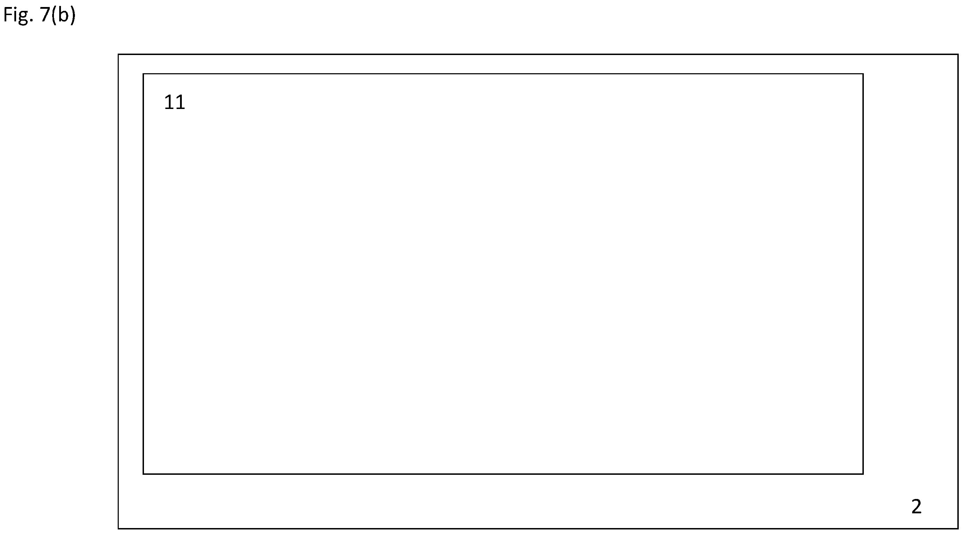

Figure 7(a) is a schematic illustration of another method of storing data in accordance with an embodiment in which a self-balancing tree is used. In this example, the method is described as being implemented on the HSM device 21 described in relation to Figure 4. However the method may alternatively be implemented on a different type of device. In a first scenario described in relation to Figure 7(a), no data items are stored initially, as shown in Figure 7(b).

In S701, a first first level cryptographic key (in this example, referred to as a third key K₃) from a first set of cryptographic keys is stored in an encrypted manner using a master key (in this example referred to as K₄) as has been described previously.

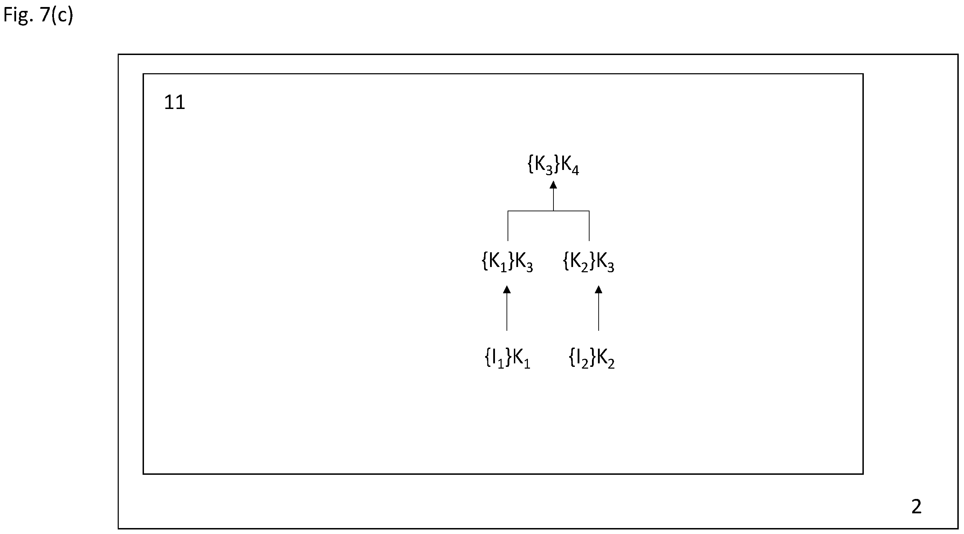

A first set of data items is then stored in an encrypted manner in S702. The first set of data items comprises a first data item I₁ stored in an encrypted manner using a first final cryptographic key K₁ from the first set of cryptographic keys and a second data item I₂ stored in an encrypted manner using a second final cryptographic key K₂ from the first set of cryptographic keys. Each key in the first set of cryptographic keys other than the first first level cryptographic key K₃ is also stored in an encrypted manner using another key from the first set of keys. In this example, the first cryptographic key is encrypted with first first level cryptographic key (the third cryptographic key K₃) and the result is stored in the first storage component 11. The second key K₂ is stored on the data storage component 11 in an encrypted manner, also using the first first level cryptographic key (third key K₃). Figure 7(c) shows the stored data at this stage.

In step S702, a first item of data I₁ is encrypted with a first cryptographic key K₁ and stored in a first storage component as described above. The first data item is encrypted with its own key, in other words a key that is only used in the first storage component to encrypt the first data item and is not used to encrypt any other data in the first storage component. In one example, the first item of data is sent by a client to the HSM device 21, encrypted with a communication key which is used to secure transmission between the client and the HSM 21. The HSM 21 decrypts the first item of data using the communication key and stores it in the RAM 309. The HSM 21 then generates the first cryptographic key K₁, by implementing a cryptographic key generation algorithm in the firmware. The first cryptographic key K₁ is stored in the RAM 309. The first item of data is then encrypted with the first cryptographic key K₁, and the result is stored in the first storage component, which in this example is the Flash storage component 11. The first cryptographic key is a final key. A similar process is performed for the second data item I₂.

In S703, a second first level cryptographic key (in this example, referred to as a fifth key K₅) from a second set of cryptographic keys is stored in an encrypted manner using the master key as has been described previously.

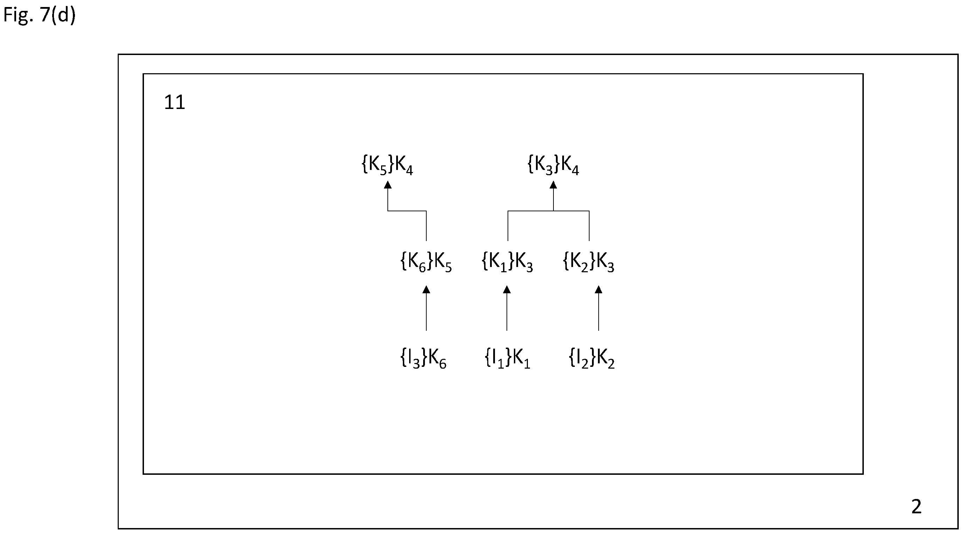

A second set of one or more data items is then stored in an encrypted manner in S704. The second set of data items comprises a third data item I₃ stored in an encrypted manner using a third final cryptographic key (in this example referred to as the sixth key K₆) from the second set of cryptographic keys. Each key in the second set of cryptographic keys other than the second first level cryptographic key K₅ is also stored in an encrypted manner using another key from the second set of keys. In this example, the sixth cryptographic key is encrypted with second first level cryptographic key K₅ and the result is stored in the first storage component 11. Figure 7(d) shows the stored data at this stage.

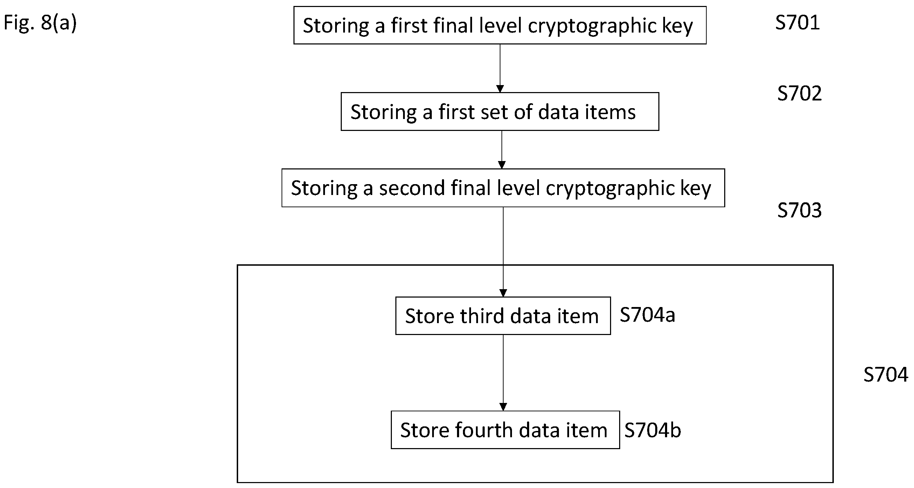

As described above, in the first scenario described in relation to Figure 7(a), no data items are stored initially. In a second scenario described in relation to Figure 8(a), a first, second and third data item are stored initially in S701 to S704a, in the same manner as has been described in relation to Figure 7(a) in steps S701 to S704. After these steps are performed, the tree comprises a gap, indicated by the dashed line in Figure 8(b) (which shows the same key arrangement as in Figure 7(d)). The gap is formed because a key (K₅) is not used to encrypt the maximum number of keys. This is also referred to as an incomplete tree.

If a further data item is provided for storage in the first storage component, a further step is performed in S704. In this step, S704b, the further data item is stored on the incomplete part of the tree, which in this example is in the second set of one or more data items. In step S704b, a further item of data, in this example the fourth item I₄ is encrypted with a new final key, in this example the seventh cryptographic key K₇ and stored in the first storage component. Although in this example, only two levels of keys are stored initially, the same method may be applied where more than two levels of keys are stored initially, with an incomplete part of the tree. Step S704b may performed some time after S704b - for example the fourth item I₄ may be provided for storage days or weeks later. Alternatively, S704a and S704b may be performed together, where the fourth data item is provided at the same time as the third data item.

In one example, the fourth item of data is sent by a client to the HSM device 21, encrypted with a communication key which is used to secure transmission between the client and the HSM 21. The HSM 21 decrypts the fourth item of data using the communication key and stores it in the RAM 309. The HSM 21 then generates a new final key in the second set of keys, the seventh cryptographic key K₇, by implementing a cryptographic key generation algorithm in the firmware. The seventh cryptographic key K₇ is stored in the RAM 309. The fourth item of data is then encrypted with the seventh cryptographic key K₇, and the result is stored in the first storage component.

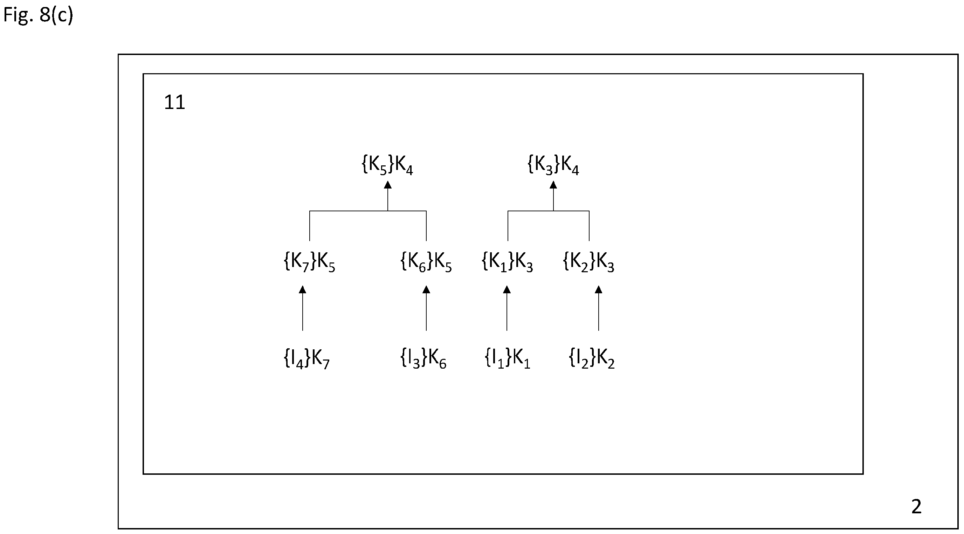

The first level key in the incomplete part of the tree is then used to store the new final key. In this example, the fifth cryptographic key K₅ is not currently used to store the permitted maximum number of keys. In particular, in an encryption tree, each key other than the final cryptographic keys is used to encrypt a maximum of L cryptographic keys, where L is a positive integer greater than or equal to 2. In this example, L= 2. In S704b, a higher level key that is used to encrypt less than L cryptographic keys is identified. In particular, the fifth cryptographic key K₅ is only used to encrypt one key. The fifth cryptographic key K₅ is thus decrypted by retrieving the master key K₄ from the second storage component, and retrieving and decrypting any higher level keys in the same chain as the fifth cryptographic key K₅. The decrypted fifth cryptographic key K₅ is stored in RAM and used to encrypt the seventh cryptographic key K₇. The encrypted seventh cryptographic key K₇ is stored in the first storage component. As shown in Figure 8(b) and as described previously, a sixth cryptographic key K₆ is stored in the first storage component in an encrypted manner using the fifth cryptographic key K₅. A third data item I₃ is stored in the first storage component in an encrypted manner using a sixth cryptographic key K₆. The fifth cryptographic key K₅ is stored in an encrypted manner in the first storage component using a master key K₄. Figure 8(c) shows the data stored in the first storage component after S704 has been performed. In this figure, the encrypted seventh cryptographic key, {K₇}K₅ is also stored in the first storage component.

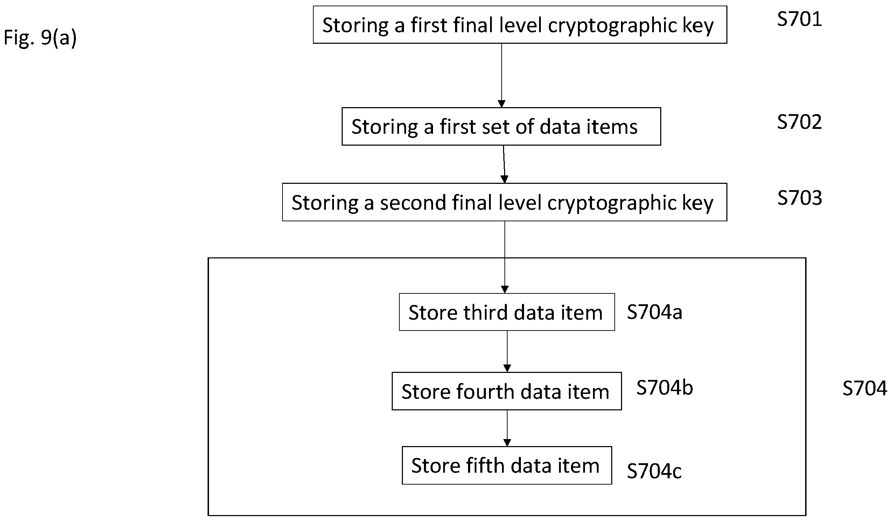

In a third scenario described in relation to Figure 9(a), first, second, third and fourth data items are stored initially in S701 to S704b, in the same manner as has been described in relation to Figure 8(a). In this example, there are no gaps in the tree structure, as shown in Figure 9(b) (which shows the same key arrangement as in Figure 8(c)). S704 comprises a further step, in which a further data item is stored in one of the first or second set of data items. In this example, the further data item is stored in the second set of data items. In step S704c, a further item of data, in this example the fifth item I₅ is encrypted with a new final key, in this example the eighth cryptographic key K₈ and stored in the first storage component. In this example, the existing final keys are all second level keys initially. The new final key will be a third level key however, as described below.

Although in this example, only two levels of keys are stored initially, the same method may be applied where more than two levels of keys are stored initially, with no incomplete parts. In one example, the fifth item of data is sent by a client to the HSM device 21, encrypted with a communication key which is used to secure transmission between the client and the HSM 21. The HSM 21 decrypts the fifth item of data using the communication key and stores it in the RAM 309. The HSM 21 then generates the new final key in the second set of keys, the eighth cryptographic key K₈, by implementing a cryptographic key generation algorithm in the firmware. The eighth cryptographic key K₈ is stored in the RAM 309. The fifth item of data is then encrypted with the eighth cryptographic key K₈, and the result is stored in the first storage component.

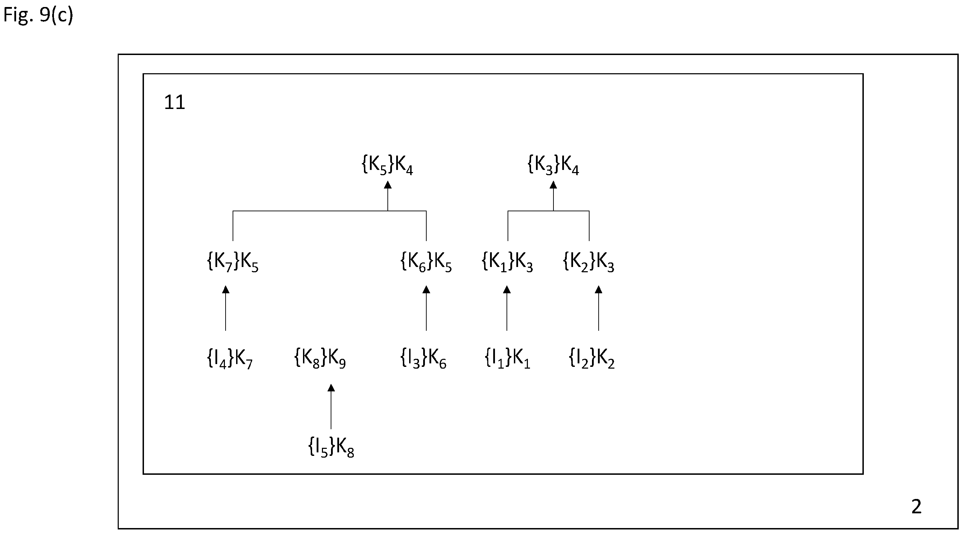

A new second level cryptographic key in the second set of keys, in this example the ninth key K₉, is generated, and used to encrypt the new final cryptographic key, the eighth key K₈. In this example, the HSM 21 generates the new second level key, the ninth cryptographic key K₉, by implementing a cryptographic key generation algorithm in the firmware. The ninth cryptographic key K₉ is stored in the RAM 309. The new final cryptographic key K₈ is encrypted with the new second level key, the ninth cryptographic key K₉, and the result is stored in the first storage component 11. This is shown in Figure 9(c).

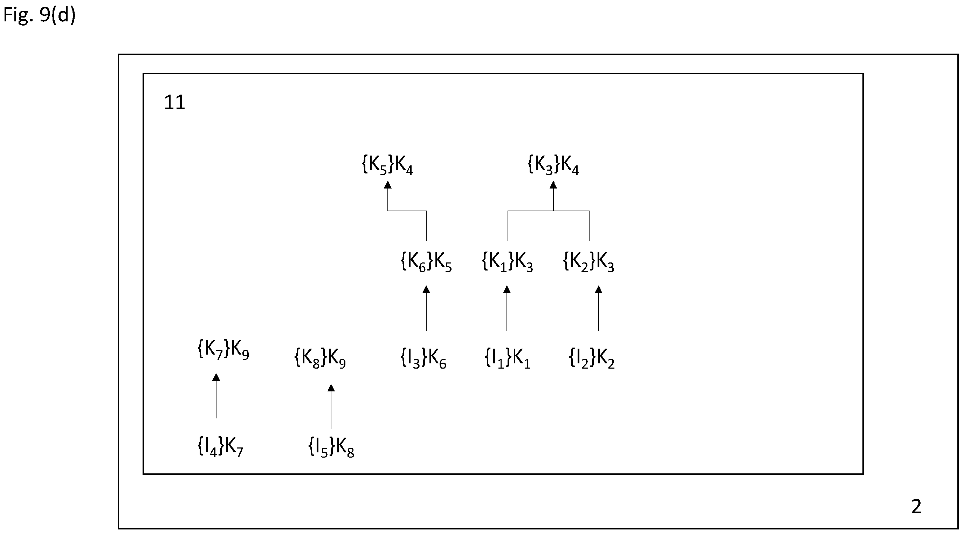

An existing final cryptographic key in the selected set is then selected. The selected existing final cryptographic key is a second level key. In this example, the second set was selected, and the seventh cryptographic key K₇ is selected. The selected existing final cryptographic key K₇ is decrypted by retrieving the master key K₄ from the second storage component, and retrieving and decrypting any higher level keys in the same chain as the selected existing final cryptographic key K₇ - in the example shown in Figure 9(b) this would be the fifth key K₅. The decrypted existing final cryptographic key K₇ is then re-encrypted using the new second level cryptographic key K₉. The re-encrypted selected existing cryptographic key K₇ is stored in the first storage component. This is shown in Figure 9(d). The selected existing final cryptographic key K₇ becomes a third level key in this step. It is still a final cryptographic key, since it is still used to encrypt the fourth data item I₄.

The new second level key, K₉, is then encrypted with the previous first level key, K₅, that was previously used to encrypt the selected final key K₇, and stored. The first level key K₅ was already decrypted in the previous step. The new second level cryptographic key K₉ is encrypted using the existing first level cryptographic key K₅ and stored in the first storage component 11 as {K₉}K₅. At this point, an unbalanced tree structure is created. The first set of data items is protected by a first set of keys comprising two final keys which are second level keys and one first level key. This first level key is encrypted by the master key. The second set of data items is protected by three final keys. One of the final keys is a second level key which is stored encrypted by the second first level key K₅. Two of the final keys are third level keys, which are stored in an encrypted manner using a second level key K₉, which is in turn stored in an encrypted manner using the second first level key. This is shown in Figure 9(e).

In the above described second scenario, a new data item is added to the tree. Various balancing algorithms may be used in order to select where a new data item is to be added, in order to keep the number of levels to a minimum.

In the above described methods, each data item is encrypted with its own symmetric key and stored on the data volume (the first storage component) in encrypted form. The encryption keys for a number of data items are themselves encrypted with a higher-level encryption key. This carries on, to form a tree of encryption keys with a single master key at the top.

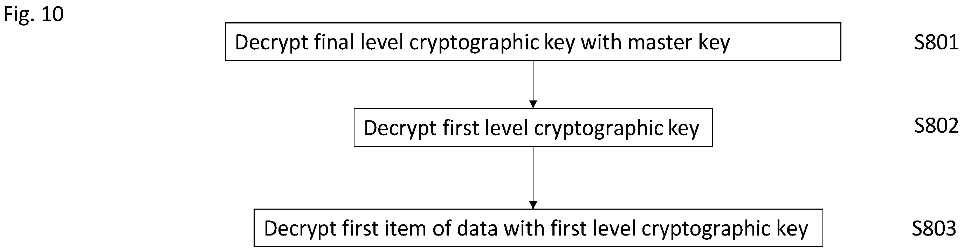

Figure 10 shows a schematic illustration of a method of reading a data item from a first storage component in accordance with an example. To read a data item, the master key is retrieved and used to decrypt the lower-level keys along the chain until the key for the data item in question is obtained. The encrypted data from the storage volume is then decrypted. Again, in this example, the method is described as being implemented on the HSM device 21 described in relation to Figure 4. However the method may alternatively be implemented on a different type of device.

The method may be performed in response to a client request to read, retrieve or use the first item of data. For example, the client may send a command to perform a cryptographic operation, such as signature, encryption or decryption for example, using the first item of data. The first item of data is then read into the HSM RAM 309 using the following method.

In S801, the first level cryptographic key protecting the data item is decrypted using the master key.

The master key is retrieved from the second storage component in S801.

For example, in the scenario shown in Figure 2(a), the master key K₁₅ is retrieved and stored in the RAM 309. The encrypted first level key {K₁₃}K₁₅ is retrieved from the first storage component and stored in the RAM 309. The first level key K₁₃ is then decrypted using the master key and stored in the RAM 309.

In S802, the final cryptographic key is decrypted using the first level key and any other keys in the same chain as the final cryptographic key.

For example, in the scenario shown in Figure 2(a), the encrypted ninth cryptographic key {K₉}K₁₃ is then retrieved from the first storage component and decrypted using the first level key K₁₃. The ninth key K₉ is then stored in the RAM 309. The encrypted first key {K₁}K₉ is retrieved from the first storage component and stored in the RAM 309. The first key K₁ is then decrypted using the ninth key K₉. The first key K₁ is then stored in the RAM 309.

In S803, the first item of data is decrypted with the first cryptographic key.

For example, in the scenario shown in Figure 2(a), the encrypted first item of data {I₁}K₁ is retrieved from the first storage component and stored in the RAM 309. The first item of data I₁ is then decrypted using the first key K₁. The first item of data I₁ is then stored in the RAM 309. It may then be used in the performance of a cryptographic operation performed on the HSM for example. For example it may be encrypted using a communication key and sent to the client, or used to decrypt an item of data received from the client.

A similar procedure applies to updating a data item.

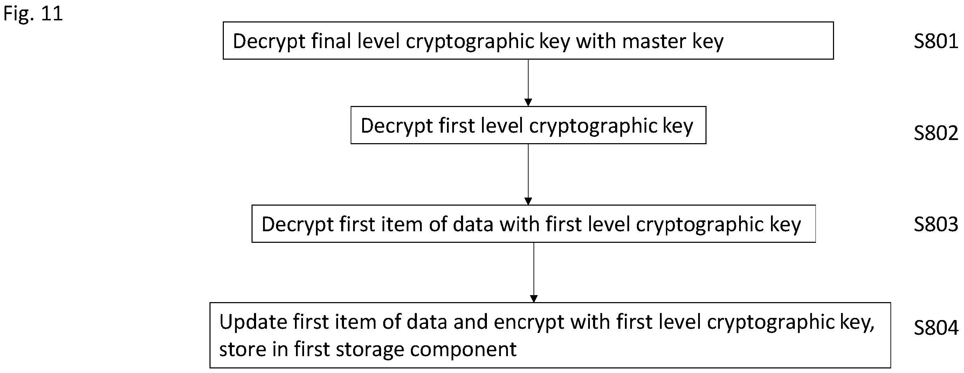

Figure 11 shows a schematic illustration of a method of updating or overwriting a data item from a first storage component in accordance with an embodiment. To update a data item, the master key is retrieved and used to decrypt the lower-level keys along the chain until the key for the data item in question is obtained. The encrypted data from the storage volume is then decrypted. Again, in this example, the method is described as being implemented on the HSM device 21 described in relation to Figure 4. However the method may alternatively be implemented on a different type of device.

The method may be performed in response to a client request to update the first item of data. For example, the client may send a command to perform a cryptographic operation, such as signature, encryption or decryption for example, using the first item of data. The first item of data is then read into the HSM RAM 309 and updated before storing the updated item using the following method.

S801 to S803 are performed as described previously in relation to Figure 10. In S804, the first item of data I₁ is then updated, for example an operation may be performed on the first item of data to give an updated item of data, or a new first item of data may be retrieved. The new first item of data is then encrypted with the first cryptographic key and this is stored in first storage component.

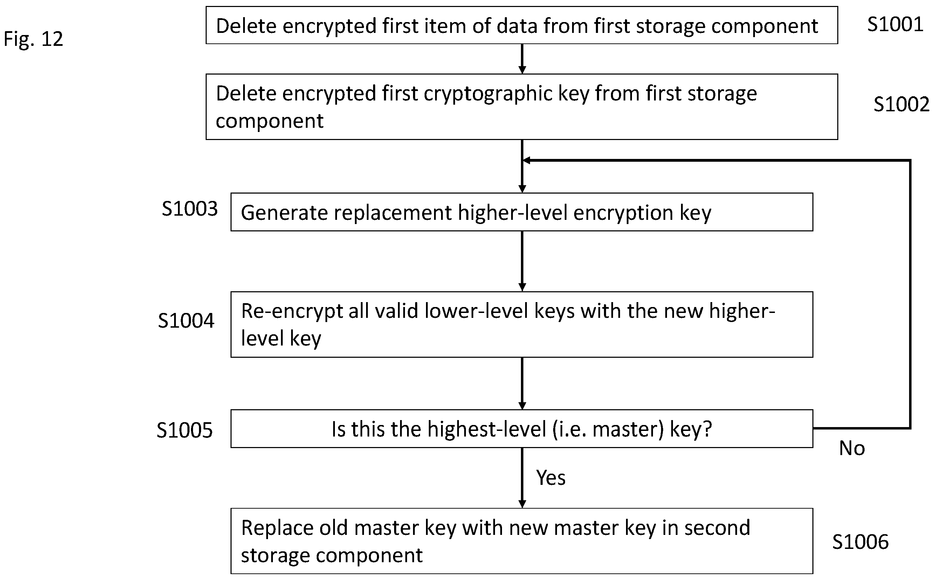

Figure 12 is a schematic illustration of a method of deleting a data item according to an embodiment. To securely delete a data item, its encryption key is deleted. The other encryption keys stored using the same higher level key are re-encrypted with a new higher-level encryption key. In turn, that higher-level encryption key is re-encrypted, and so on until there is a new value for the master key.

Again, in this example, the method is described as being implemented on the HSM device 21 described in relation to Figure 4. However the method may alternatively be implemented on a different type of device. The method may be performed in response to a client request to delete the first item of data.

In S1001, the encrypted first data item is deleted from the first storage component. The encrypted first data item may be {I₁}K₁ in Figure 2(a) for example.

In S1002, the encrypted copy of the final key used to encrypt the data item is deleted from the first storage component. The encrypted copy of the final key is {K₁}K₉ in Figure 2(a), in which the second level key K₉ is used to encrypt the final key.

In S1003 to S1006, a first plurality of cryptographic keys that protect the first data item through a chain of encryption are replaced with new cryptographic keys. Furthermore, any cryptographic keys that were stored using one of the first plurality of cryptographic keys are re-encrypted with the replacement cryptographic key. In the example shown in Figure 12, this is performed as an iterative process.

In S1003, a new higher level key is generated. In the first iteration in this example, a new second level key, in this case the sixteenth key K₁₆, is generated by implementing a cryptographic key generation algorithm in the firmware.

In S1004, all valid lower level keys are re-encrypted with the new higher level key. In the first iteration, any other final encryption keys stored using the same higher level key are re-encrypted with the new second level encryption key, the sixteenth key K₁₆. The final encryption keys stored using the same higher level key are those which are stored using the same second level encryption key (the ninth key) used to encrypt the deleted final key. In this step, any keys which are stored in an encrypted manner using the ninth key (in this example, the second key K₂) are re-encrypted with the new key K₁₆ and stored in the first storage component.

In this step, the encrypted ninth cryptographic key is retrieved from the first storage component and loaded into RAM. The set of one or more cryptographic keys in the same chain are also retrieved, so as to decrypt the ninth cryptographic key. This includes retrieving the master key from the second storage component. In this example, the encrypted ninth cryptographic key {K₉}K₁₃ and the encrypted thirteenth cryptographic key {K₁₃}K₁₅ are retrieved from the first storage component, and the master key K₁₅ is retrieved from the second storage component. The master key K₁₅ is used to decrypt the thirteenth cryptographic key K₁₃ and the thirteenth cryptographic key K₁₃ is used to decrypt the ninth cryptographic key K₉. The encrypted second cryptographic key {K₂}K₉ is then retrieved, and the second cryptographic key K₂ decrypted using the ninth key K₉. The second cryptographic key K₂ is then re-encrypted using the new key K₁₆. This is stored as {K₂}K₁₆, overwriting the previous encrypted second key {K₂}K₉.

In S1005, it is determined whether the replacement key is a master key. In this first iteration, the replacement key is not the master key, and therefore the method returns to S1003, where a replacement higher level key is generated. For the second iteration and onwards, the higher level key is the key which is used to encrypt the key replaced in the previous iteration. In the second iteration, the new higher level key is a new first level key, the seventeenth key in this example. The new first level key K₁₇ is generated by implementing a cryptographic key generation algorithm in the firmware.

The method continues to S1004, where in the second iteration and onwards, any key encrypted with the previous higher level key is re-encrypted with the replacement higher level key. In the second iteration, the new second level key K₁₆ generated in the previous iteration is then encrypted with the new first level key K₁₇ and stored as {K₁₆}K₁₇, overwriting the previous stored second level key {K₉}K₁₃ . Thus the encrypted third key {K₉}K₁₃ is deleted from the first storage component. Any other second level encryption keys stored using the same higher level key are re-encrypted with the new first level key. The second level encryption keys stored using the same higher level key are those which are stored using the same first level encryption key (the thirteenth key) used to encrypt the replaced second level key. In this step, any keys which are stored in an encrypted manner using the thirteenth key (in this example, the tenth key) are re-encrypted with the new key and stored in the first storage component. In this step, the previously decrypted thirteenth cryptographic key is used to decrypt the tenth cryptographic key K₁₀. The tenth cryptographic key K₁₀ is then re-encrypted using the new key K₁₇. This is stored as {K₁₀}K₁₇, overwriting the previous encrypted second key {K₁₀}K₁₃. In this step, any other second level keys encrypted with the old first level key K₁₃ are decrypted using the old first level key K₁₃ and re-encrypted using the new first level key K₁₇. In this example, the key K₁₀ is decrypted and re-encrypted with the new first level key K₁₇. This is then stored as {K₁₀}K₁₇. The encrypted first level key is then deleted from the first storage component.

In S1005, it is again determined whether the replacement key (the seventeenth key) is a master key. In this second iteration, the replacement key is not the master key, and therefore the method returns to S1003, where a replacement higher level key is generated. In this third iteration, the higher level key is a new master key, the eighteenth key. The new master key K₁₈ is generated by implementing a cryptographic key generation algorithm in the firmware.

The method continues to S1004, where in the third iteration, the new first level key K₁₇ is then encrypted with the new master key K₁₈ and stored as {K₁₇}K₁₈ in the first storage component, overwriting the previous stored first level key {K₁₃}K₁₅ . Any other first level encryption keys are re-encrypted with the new master key. In this step, the previously decrypted fifteenth cryptographic key is used to decrypt the fourteenth cryptographic key K₁₄. The fourteenth cryptographic key K₁₄ is then re-encrypted using the new master key K₁₈. This is stored as {K₁₄}K₁₈, overwriting the previous encrypted second first level key {K₁₄}K₁₅. In this step, any other first level keys are also decrypted with the old master key K₁₅ and re-encrypted with the new master key K₁₈. In this example, the key K₁₄ is decrypted and re-encrypted to be stored as {K₁₄}K₁₈.

In S1006, the old master key K₁₅ is deleted and the new master key K₁₈ stored in the second storage component. The new master key is stored in the hardware device, such that it completely overwrites the previous master key. As described previously, in this example, the second storage component stores data in a manner that does not allow previously deleted master keys to be read. In hardware terms, the second storage component may be an FRAM memory or a RAM device with battery backup, which is separate from the first storage component, (which may be a flash storage device).

Since the previous master key is unavailable, any old copies of the storage volume can no longer be decrypted, so the deleted first data item cannot be recovered from a backup. A client using the HSM device can therefore be confident that sensitive data is properly destroyed if and when they request the HSM to do so. The HSM can guarantee data destruction to a high security level.

In the above described example, each encrypted key is overwritten with the new encrypted key. However, in other examples, the update process may be performed by generating the new keys and storing the new encrypted versions of the keys, and then deleting the data at the end of the process, in order to provide a means of recovering data in the event of a crash. In such examples, the new data is written before erasure of the old data.

In one example, the second storage component stores two copies of the master key. At the start of the process described in relation to Figure 12, the second storage device stores two copies of master key K₁₅. Steps S1003 to S1005 are then performed, in which the new keys K₁₆, K₁₇, and K₁₈ are generated as described above, and used to encrypt the various keys {K₂}K₁₆, {K₁₆}K₁₇ etc. However, instead of storing these overwriting the previous stored encrypted keys, these are written to the first storage component without erasing or overwriting any data.

One copy of the old master key K₁₅ is then overwritten with the new master key K₁₈ in the second storage component. The old encrypted keys {K₂}K₉, {K₉}K₁₃ etc are then deleted. The method of Figure 12 may also be re-ordered so that steps S1001 and S1002 are performed at this stage, meaning item {I₁}K₁ and the encrypted first cryptographic key {K₁}K₉ are also deleted only at this stage.

Finally, the second copy of the old master key K₁₅ is overwritten with the new master key (K₁₈).

This method provides that all the 'old' data stays readable until the point where the new data becomes readable - i.e. when the first copy of the old master key is overwritten with the new master key.

On recovering from a crash, a process may be performed in which it is tried to decrypt with each of the two master keys. If the crash happened before the first copy of the master key was overwritten, the old data is still stored, and can be restored, before the secure deletion process is re-attempted. If the crash happened after the first copy of the master key was overwritten, the new data is readable, and the old data can just be deleted (and the second copy of the old master key value overwritten).

In the above described examples, each data item is encrypted with a different key. In other examples however, a single key may be used for a group of data items (e.g. a disk volume).

As has been described, the above methods may be implemented in firmware running on a HSM device. The firmware may comprise a set of computer instructions stored in non-volatile memory on the HSM device 21 and embodying the functionality as described above. The methods are implemented in code running on a Hardware Security Module (HSM) in such examples. However, in other examples, various operations may be implemented directly in hardware, for example in the programmable logic of an FPGA. For example, although the key generation, encryption or decryption operations are described in this example as being implemented in software, and in particular using code which is part of the HSM firmware, in other examples, all or part of any of the key generation, encryption or decryption operations may be offloaded on a crypto co-processor for example.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and sub-combinations of one or more features described herein.

## Claims

1. A computer implemented method comprising:
storing a first set of data items in an encrypted manner, the first set of data items comprising a first data item (I₁) stored in an encrypted manner using a first final cryptographic key (K₁) and a second data item (I₂) stored in an encrypted manner using a second final cryptographic key (K₂), wherein the first final cryptographic key (K₁) is protected through a chain of encryption by a master key and the second final cryptographic key (K₂) is protected through a chain of encryption by the master key; and
storing a second set of one or more data items in an encrypted manner, the second set of one or more data items comprising a third data item (I₅) stored in an encrypted manner using a third final cryptographic key (K₅), wherein the third final cryptographic key (K₅) is protected through a chain of encryption by the master key.

2. The method according to claim 1, further comprising:
storing a first first level cryptographic key (K₁₃) from a first set of cryptographic keys and a second first level cryptographic key (K₁₄) from a second set of cryptographic keys in an encrypted manner using the master key (K₁₅);
wherein the first set of cryptographic keys comprises the first final cryptographic key (K₁) and the second final cryptographic key (K₂), wherein each key in the first set of cryptographic keys other than the first first level cryptographic key (K₁₃) is stored in an encrypted manner using another key from the first set of keys whereby the first set of data items are protected through a chain of encryption by the first first level cryptographic key (K₁₃); and
wherein the second set of cryptographic keys comprises the third final cryptographic key (K₅), wherein each key in the second set of cryptographic keys other than the second first level cryptographic key (K₁₄) is stored in an encrypted manner using another key from the second set of keys whereby the second set of one or more data items is protected through a chain of encryption by the second first level cryptographic key (K₁₄).

3. The method according to claim 2, wherein storing the second set of data items comprises storing a fourth data item (I₆) in an encrypted manner using a fourth final cryptographic key (K₆), wherein the fourth final cryptographic key (K₆) is in the second set of cryptographic keys.

4. The method according to claim 2, wherein storing the first set of data items comprises storing a fourth data item (I₃) in an encrypted manner using a fourth final cryptographic key (K₃), wherein the fourth final cryptographic key (K₃) is in the first set of cryptographic keys, and wherein the first set of cryptographic keys further comprises a first higher level cryptographic key (K₉) and a second higher level cryptographic key (K₁₀) and wherein the first final cryptographic key (K₁) and the a second final cryptographic key (K₂) are stored in an encrypted manner using the first higher level cryptographic key (K₉) and the fourth final cryptographic key (K₃) is stored in an encrypted manner using the second higher level cryptographic key (K₁₀).

5. The method according to claim 2, wherein each key in the first set of cryptographic keys and the second set of cryptographic keys other than the final cryptographic keys is used to encrypt a maximum of L cryptographic keys, where L is a positive integer greater than or equal to 2.

6. The method according to claim 5, wherein storing the second set of data items further comprises:
identifying a higher level key that is used to encrypt less than L cryptographic keys;
generating a fourth final cryptographic key (K₆) and storing a fourth data item (I₆) in an encrypted manner using the fourth final cryptographic key (K₆), wherein the fourth final cryptographic key (K₆) is in the second set of cryptographic keys;
encrypting the fourth final cryptographic key with the identified higher level cryptographic key.

7. The method according to claim 5, wherein storing the second set of data items further comprises:
selecting a final key (K₇) in the second set of cryptographic keys;
generating a fourth final cryptographic key (K₈) and storing a fourth data item (I₅) in an encrypted manner using the fourth final cryptographic key (K₈), wherein the fourth final cryptographic key (K₈) is in the second set of cryptographic keys;
generating a new higher level cryptographic key (K₉) in the second set of cryptographic keys;
storing the selected final key (K₇) and the fourth final key (K₈) in an encrypted manner using the new higher level key (K₉);
storing the new higher level key (K₉) in an encrypted manner using the cryptographic key (K₅) previously used to store the selected final key (K₇) in an encrypted manner.

8. The method according to claim 7, wherein the final key is selected as a key protected by an encryption chain having a number of encryptions less than or equal to all other encryption chains.

9. The method according to any preceding claim, wherein the first set of data items and the second set of one or more data items are stored in a storage module comprising a first set of one or more storage components and a second storage component, wherein the master key is stored in the second storage component and wherein the data items are stored in the first set of one or more storage components.

10. A method according to any of claims 2 to 9, further comprising:
accessing the first data item, comprising:
decrypting the first first level cryptographic key (K₁₃) using the master key (K₁₅);
decrypting the first final cryptographic key (K₁), comprising decrypting each further key in the chain of encryption protecting the first data item; and
decrypting the first data item using the first final cryptographic key.

11. A method according to any of claims 2 to 9, further comprising:
deleting the first data item;
deleting the first final cryptographic key;
deleting a first plurality of cryptographic keys that protect the first data item through a chain of encryption, the first plurality of cryptographic keys including the master key and the first first level cryptographic key (K₁₃) from the first set of cryptographic keys, and generating a second plurality of cryptographic keys to replace the first plurality of cryptographic keys; and re-encrypting, using a key from the second plurality of cryptographic keys, any further cryptographic keys that were stored in an encrypted manner using a cryptographic key from the first plurality of cryptographic keys.

12. A carrier medium comprising computer readable code configured to cause a computer to perform the method of any of claims 1 to 11.

13. An apparatus, comprising a storage module configured to store:
a first set of data items in an encrypted manner, the first set of data items comprising a first data item (I₁) stored in an encrypted manner using a first final cryptographic key (K₁) and a second data item (I₂) stored in an encrypted manner using a second final cryptographic key (K₂), wherein the first final cryptographic key (K₁) is protected through a chain of encryption by a master key and the second final cryptographic key (K₂) is protected through a chain of encryption by the master key; and
a second set of one or more data items in an encrypted manner, the second set of one or more data items comprising a third data item (I₅) stored in an encrypted manner using a third final cryptographic key (K₅), wherein the third final cryptographic key (K₅) is protected through a chain of encryption by master key.

14. The apparatus of claim 13, wherein the storage module comprises a first set of one or more storage components and a second storage component, wherein the master key is stored in the second storage component and wherein the data items are stored in the first set of one or more storage components.

15. The apparatus of claim 14, wherein the second storage component has reduced data remanence compared to the first set of one or more storage components.
